# EUROPÄISCHE PATENTSCHRIFT

(11) **EP 3 403 910 B1**
(45) Veröffentlichungstag und Bekanntmachung des Hinweises auf die Patenterteilung: **12.08.2020**
(21) Anmeldenummer: 18172881.7
(22) Anmeldetag: 17.05.2018
(51) Int. Cl.: B62K 25/08, F16F 9/512, F16F 9/02, F16F 13/00, B62K 25/04

(54) **STOSSEINRICHTUNG INSBESONDERE FÜR EIN FAHRRAD**
RAM DRIVE, IN PARTICULAR FOR A MOTOR VEHICLE
DISPOSITIF DE TRACTION, EN PARTICULIER POUR UNE BICYCLETTE

(30) Priorität: 18.05.2017 DE 102017110885
(43) Veröffentlichungstag der Anmeldung: 21.11.2018
(73) Patentinhaber: DT Swiss AG, 2504 Biel (CH)
(72) Erfinder: Walthert, Martin, CH-3270 Aarberg (CH); Richter, Karsten, CH-2502 Biel (CH); Zbinden, Samuel, CH-2503 Biel (CH)
(74) Vertreter: BSB Patentanwälte Schütte & Engelen Partnerschaft mbB

(56) Entgegenhaltungen:
- DE-A1- 3 600 845
- DE-A1-102015 115 678
- US-A1- 2013 313 803

## Beschreibung

Die vorliegende Erfindung betrifft eine Stoßeinrichtung und insbesondere einen Stoßdämpfer für ein wenigstens teilweise muskelbetriebenes Zweirad und insbesondere ein Fahrrad und umfasst wenigstens ein Rohrsystem mit zwei teleskopierbaren bzw. teleskopierenden Rohren, wobei sich das Rohrsystem von einem ersten Ende zu einem zweiten Ende erstreckt. Dabei ist ein Federsystem vorgesehen, welches zwischen dem ersten Ende und dem zweiten Ende wirksam ist und welches die beiden Rohre in eine wenigstens teilweise ausgefahrene Position vorbelastet.

Im Stand der Technik sind verschiedenste Stoßdämpfer für Fahrräder mit und auch ohne elektrischen Hilfsmotor bekannt geworden. Bei Zweirädern, die wenigstens teilweise muskelbetrieben sind, spielt das Gewicht eine erhebliche Rolle, insbesondere, wenn es um den Einsatz in Sport- oder Wettkampfrädern geht. Aber auch ambitionierte Amateure legen großen Wert auf besonders leichte Zweiräder. Das gilt insbesondere auch für den Bereich von Mountainbikes. Zur Gewichtsreduktion wird bei Zweiradkomponenten ein nicht unerheblicher Aufwand betrieben.

Mountainbikes werden oftmals mit einer Federgabel und einem Hinterradstoßdämpfer ausgerüstet. Durch die Stoßeinrichtungen am Vorderrad und am Hinterrad werden Stöße beim Fahren im Gelände oder bei Bergabfahrten gedämpft, sodass der Komfort gesteigert wird. Zusätzlich kann auch die Fahrsicherheit erhöht werden, da die Räder des Fahrrads eine bessere Traktion aufweisen.

In den letzten Jahren geht die Entwicklung bei Federgabeln für performanceorientierte Mountainbikes hauptsächlich zu zwei Arten von Federungen. Das ist entweder der Einsatz einer einfachen Schraubenfeder oder der Einsatz einer Luftfederung. Der Vorteil einer Schraubenfeder ist die lineare Federkennlinie und ihre minimale Reibung, da keine Dichtungen notwendig sind. Ein Nachteil ist dafür das relativ hohe Gewicht, da Schraubenfedern in der Regel aus Metall bestehen. Ein weiterer Nachteil ist die aufwändige Anpassung der Federkraft für unterschiedliche Fahrergewichte. So ist ab einem gewissen Unterschied des Fahrergewichts der Austausch der gesamten Schraubenfeder notwendig. Bei der Luftfederung sind hingegen das sehr leichte Gewicht und die beliebige Anpassung der Federhärte über ein Druckventil vorteilhaft. Nachteilig ist aber die erhöhte Reibung aufgrund der nötigen Dichtungen. Es wird eine Losbrechkraft benötigt, bevor die Luftfeder reagiert und ein- oder ausfedert. Außerdem ist die Federkennlinie nicht linear.

Aus dem Stand der Technik ist mit der US 5,195,766 auch eine Federgabel für Fahrräder bekannt geworden, die eine als Stahlfeder ausgebildete Hauptfeder und eine ergänzende Gasfeder umfasst. Die Stahlfeder und die Gasfeder sind in Reihe angeordnet. Die Gasfeder ist von aussen befüllbar, sodass der Druck einstellbar und die Dämpfungscharakteristik der Federgabel veränderbar ist. Durch die ergänzende Gasfeder umfasst die Federgabel eine Endanschlagsdämpfung, da mit zunehmender Kompression die Federkraft der Gasfeder immer stärker wird, aber eine solche Endanschlagsdämpfung haben auch andere Gasfedern. Die bekannte Federgabel funktioniert, weist aber ein sehr hohes Gesamtgewicht auf.

Mit der US 2013/313803 A1, die alle Merkmale des Oberbegriffs des Anspruchs 1 offenbart, ist ein Federbein einer Federgabel für Fahrräder bekannt geworden, bei dem ein zusätzlicher Gummipuffer kleine Stöße federn soll. Der Gummipuffer ist in dem Kolben der Gasdruckfeder eingebettet, der durch einen Kopf an der Kolbenstange kontaktiert ist. Der Gummipuffer weist eine nichtlineare Kennlinie auf. Die Kolbenstange wird bei der Federung kleiner Stöße mit bewegt.

Mit der DE 10 2015 115 678 A1 ist eine Federgabel für Zweiräder bekannt geworden, bei der eine Radgrößenstelleinheit vorhanden ist, welche an der zur Gabelbrücke zugewandten Seite der Federbeins angeordnet ist. Zwei durch einen Federkraftspeicher vorbelastete Einstellelemente ermöglichen eine Verstellung eines Endanschlags eine Luftfedereinheit. Hierdurch kann der Federweg der Federgabel für verschiedene Radgrößen eingestellt werden.

Es ist deshalb die Aufgabe der vorliegenden Erfindung, eine Stoßeinrichtung für ein wenigstens teilweise muskelbetriebenes Zweirad zu Verfügung zu stellen, welcher gegenüber dem angeführten Stand der Technik wenigstens eine verbesserte Eigenschaft und insbesondere ein verbessertes Ansprechverhalten bei geringem Gesamtgewicht aufweist.

Diese Aufgabe wird gelöst durch eine Stoßeinrichtung mit den Merkmalen des Anspruchs 1. Bevorzugte Ausgestaltungen der Erfindung werden in den Unteransprüchen definiert. Weitere Vorteile und Merkmale der vorliegenden Erfindung ergeben sich aus der allgemeinen Beschreibung und der Beschreibung der Ausführungsbeispiele.

Eine erfindungsgemäße Stoßeinrichtung ist für ein wenigstens teilweise muskelbetriebenes Zweirad und insbesondere ein Fahrrad vorgesehen. Die Stoßeinrichtung umfasst wenigstens ein Rohrsystem mit zwei teleskopierbaren Rohren, wobei sich das Rohrsystem von einem ersten Ende zu einem zweiten Ende erstreckt. Es ist ein Federsystem vorgesehen, welches zwischen den beiden Enden (erstes Ende und zweites Ende) wirksam ist und welches die beiden Rohre in eine (wenigstens teilweise) ausgefahrene Position vorbelastet. Dabei umfasst das Federsystem eine Positivluftfeder und eine davon unabhängige und in Reihe geschaltete Ergänzungsfeder. Die Positivluftfeder und auch die Ergänzungsfeder belasten das Rohrsystem in die (wenigstens teilweise) ausgefahrene Position vor. Dabei weist die Ergänzungsfeder eine geringere Losbrechkraft auf als die Positivluftfeder. Ein Verhältnis des Federweges der Positivluftfeder zu dem Federweg der Ergänzungsfeder ist größer als 4:1. Die Ergänzungsfeder ist zwischen der Kolbenstange und dem zweiten Rohr angeordnet.

Dabei kann die ausgefahrene Position insbesondere eine vollständig ausgefahrene Position sein oder es ist eine Grundposition oder auch eine SAG-Position.

Die erfindungsgemäße Stoßeinrichtung hat viele Vorteile. Ein erheblicher Vorteil der erfindungsgemäßen Stoßeinrichtung besteht darin, dass nicht nur eine Positivluftfeder eingesetzt wird, sondern auch eine Ergänzungsfeder, die in Reihe geschaltet ist. Das bedeutet, dass beide Federn gleichzeitig wirksam sind.

Zwei unterschiedliche in Reihe geschaltete Federn ermöglichen es, eine insgesamt noch vorteilhaftere Stoßeinrichtung zur Verfügung zu stellen. Die Stoßeinrichtung weist (wenigstens) eine Luftfeder als Positivfeder auf und kann somit mit einem geringen Gesamtgewicht gefertigt werden. Dadurch eignet sich die Stoßeinrichtung gut für den Einsatz an sportlichen Zweirädern im Amateurbereich und auch im professionellen Bereich. Weiterhin umfasst die erfindungsgemäße Stoßeinrichtung eine Ergänzungsfeder, die in Reihe zu der Luftfeder geschaltet ist und die das Rohrsystem ebenfalls in eine bzw. die ausgefahrene Position vorbelastet.

Die Ergänzungsfeder kann als ein anderes Federsystem ausgeführt werden und bietet somit erhebliche Gestaltungsmöglichkeiten. Dadurch kann die Ergänzungsfeder reibungsarm ausgestaltet werden, sodass die erfindungsgemäße Stoßeinrichtung einerseits die Vorteile einer Luftfeder aufweist und andererseits ein leichtes und reibungsarmes Ansprechverhalten ermöglicht. Es ist sogar möglich, ein Federsystem zur Verfügung zu stellen, bei dem die Losbrechkraft null beträgt, welches also auch bei kleinsten Belastungsänderungen reagiert.

Ein weiterer erheblicher Vorteil ist, dass die Federkennlinie des gesamten Federsystems linearer ausgestaltet werden kann. Dadurch wird das Verhalten der Stoßeinrichtung im Betrieb verbessert. Es wird die Stützwirkung verbessert und ein berechenbareres Verhalten erzielt.

In bevorzugten Ausgestaltungen ist die Stoßeinrichtung als Stoßdämpfer ausgebildet. Insofern kann der Begriff "Stoßeinrichtung" in der vorliegenden Anmeldung durchgängig auf den Begriff "Stoßdämpfer" präzisiert werden. Ein solcher Stoßdämpfer kann insbesondere für das Vorderrad oder z. B. für das Hinterrad vorgesehen sein. Ein Stoßdämpfer für das Vorderrad wird auch als Federgabel bezeichnet. Ein Stoßdämpfer für das Hinterrad kann auch als Hinterradstoßdämpfer bezeichnet werden.

Unter "einer ausgefahrenen Position" wird im Sinne der vorliegenden Anmeldung auch eine wenigstens teilweise ausgefahrene Position verstanden. Eine ausgefahrene Position kann, muss aber nicht vollständig ausgefahren sein, beispielsweise, wenn sich durch eine Gegenkraft ein Gleichgewicht einstellt. Umfasst ist aber auch, dass "eine ausgefahrene Position" eine vollständig ausgefahrene Position ist.

In bevorzugten Ausgestaltungen ist die Stoßeinrichtung als Federgabel ausgebildet und eines der beiden Rohre ist als Standrohr und das andere Rohr als Tauchrohr ausgebildet. Dabei ist es bevorzugt, dass das Standrohr mit der Gabelkrone oder dem Gabelschaft und das Tauchrohr mit einem Ausfallende verbunden ist.

In ein besonders bevorzugten Ausgestaltung ist die Stoßeinrichtung als Federgabel ausgeführt und ist für ein wenigstens teilweise muskelbetriebenes Zweirad vorgesehen. Die Federgabel umfasst wenigstens ein Rohrsystem und einen Radaufnahmeraum daneben. Das Rohrsystem umfasst zwei Rohre, von denen ein Rohr als Standrohr und das andere Rohr als damit zusammenwirkendes Tauchrohr ausgebildet ist. Die beiden Rohre sind miteinander teleskopierbar gekoppelt. Das Rohrsystem erstreckt sich von einem ersten Ende zu einem zweiten Ende. Es ist ein Federsystem vorgesehen und insbesondere integriert, welches zwischen den beiden Enden wirksam ist und welches die beiden Rohre in eine (weiter) ausgefahrene Position und zum Beispiel in den Ruhezustand vorbelastet. Das Federsystem umfasst eine Positivluftfeder und eine Ergänzungsfeder, welche beide das Rohrsystem in die bzw. eine ausgefahrene Position vorbelasten. Die Federgabel weist vorzugsweise zwei Rohrsysteme und den Radaufnahmeraum dazwischen auf.

In bevorzugten Weiterbildungen aller Ausgestaltungen umfasst die Positivluftfeder eine Positivkammer in einem der beiden Rohre. Insbesondere ist die Positivkammer in dem ersten Rohr angeordnet.

Vorzugsweise wird die Positivkammer von einem mit einer Kolbenstange verbundenen beweglichen Kolben begrenzt. Insbesondere ist die Kolbenstange mit dem zweiten Rohr gekoppelt.

Die Ergänzungsfeder verbindet die Kolbenstange mit dem zweiten Rohr und besonders bevorzugt mit dem zweiten Ende des Rohrsystems. Dadurch wird eine Reihenschaltung von der Positivluftfeder und der Ergänzungsfeder erzielt, sodass sowohl die Positivluftfeder als auch die Ergänzungsfeder im vollständig ausgefahrenen Zustand und/oder im Ruhezustand (und nicht nur dort) wirksam sind.

Es ist besonders bevorzugt, dass die Ergänzungsfeder eine geringere Losbrechkraft aufweist als die Positivluftfeder. Die Losbrechkraft der Ergänzungsfeder ist vorzugsweise viel geringer als die Losbrechkraft der Positivluftfeder und insbesondere viel geringer als die Losbrechkraft des gesamten Federsystems (abgesehen von der die Losbrechkraft der Ergänzungsfeder, die vorzugsweise null ist). Besonders bevorzugt ist die Losbrechkraft nahezu null oder praktisch gleich null oder null. Die Losbrechkraft ist von der wirkenden Kraft zu unterscheiden. Im normalen Betrieb oder wenn ein Fahrer auf dem Fahrrad sitzt und sich die Stoßeinrichtung in der SAG-Position (oder auch einer anderen Position) befindet, befinden sich die äußeren Kräfte und die Kräfte des Federsystems (im nun betrachteten statischen Fall) im Gleichgewicht. Wenn die Losbrechkraft sehr klein und vorzugsweise gleich null ist, dann bewirkt jeder kleine oder auch kleinste Stoß eine entsprechende Federbewegung des Federsystems. Sofern die Ergänzungsfeder schon nicht auf Block ist, führt jeder kleine und kleinste Stoß zu einem Einfedern des Federsystems. Danach federt beim Ausfedern aber auch regelmäßig die Ergänzungsfeder mit aus, so dass dann wiederum bei kleinen und kleinsten Stößen wieder Federweg der Ergänzungsfeder zur Verfügung stehen kann, bis diese wieder auf Block (vollständig eingefedert)ist. Ein stärkerer Stoß, der eine Kraft erzeugt, die die Losbrechkraft der Positivluftfeder übersteigt, führt dazu, dass die Positivluftfeder und die Ergänzungsfeder einfedern, sofern die Ergänzungsfeder nicht schon auf Block ist. Das Federsystem reagiert damit in vielen Fällen auch auf kleine und kleinste Stöße, auch wenn bei denen die auf das Federsystem einwirkende Kraft geringer ist als die Losbrechkraft der Positivluftfeder.

Nach einer Bodenwelle oder einem Hindernis, bei dem die Stoßeinrichtung einfedert, federt das Federsystem wieder aus. Dabei federn die Ergänzungsfeder und auch die Positivluftfeder wieder aus, sofern die auf die Ergänzungsfeder wirkende Kraft die Maximalkraft unterschreitet, wobei auch Hystereseeffekte der Positivluftfeder und des Federsystems insgesamt zu berücksichtigen sind. Deshalb kann dann wieder Federhub der Ergänzungsfeder zur Verfügung stehen, sodass beim nächsten (auch schon geringen) Stoß die Ergänzungsfeder reagiert und den Stoß abfedert. Das passiert im realen Betrieb häufig und auch dann, wenn die Ergänzungsfeder schon in der (statischen) SAG-Position an sich vollständig eingefedert und somit auf Block ist.

Im Stand der Technik gibt es z. B. als Federgabeln ausgeführte luftgefederte Stoßeinrichtungen, bei denen die Losbrechkraft, die eine Luftfeder überwinden muss, etwa 20 Newton beträgt. Wenn nach einem Sprung oder dergleichen ein Fahrrad mit einer solchen bekannten Federgabel wieder auf dem Boden auftrifft, wird zunächst ein Schlag von 20 Newton ungefedert auf die Hände des Fahrers weiter geleitet. Das ist nicht besonders sanft und passiert jedes Mal, wenn das Rad wieder auf dem Boden auftrifft.

Mit einer als Federgabel ausgebildeten Stoßeinrichtung gemäß der Erfindung, können solche Stöße durch das Federsystem gefedert werden. Die Losbrechkraft der Ergänzungsfeder ist sehr klein gegenüber der Losbrechkraft der Positivluftfeder und insbesondere null.

Die insgesamt wirkende Losbrechkraft der Luftfeder des Federsystems hängt bei der Stoßeinrichtung nicht nur von der Positivluftfeder ab, sondern auch von weiteren Komponenten, wie z. B. einer eventuell vorhandenen Negativfeder. Auch ein eventuell vorhandenes Dämpfungssystem kann zu der Losbrechkraft beitragen (und diese erhöhen).

Die Losbrechkraft des Federsystems wird durch die kleinste wirkende Losbrechkraft bestimmt. Wenn die Losbrechkraft der Ergänzungsfeder (vorzugsweise 0) überschritten wird, federt das Federsystem ein (oder aus), auch wenn die Positivluftfeder noch nicht reagieren sollte.

Es ist besonders bevorzugt, dass die Ergänzungsfeder eine geringere Reibung aufweist als die Positivluftfeder. Besonders bevorzugt weist die Ergänzungsfeder eine lineare Federkennlinie auf. Insbesondere ist die Federkennlinie der Ergänzungsfeder wenigstens über den wesentlichen Bereich des Hubes der Ergänzungsfeder linear.

Insbesondere umfasst die Ergänzungsfeder wenigstens ein Federelement wie zum Beispiel eine Schraubenfeder. Das Federelement ist insbesondere metallisch ausgebildet. Möglich ist es auch, dass eine Schraubenfeder oder eine Spiralfeder oder eine Tellerfeder eingesetzt wird. Möglich ist es auch, dass die Ergänzungsfeder aus einem elastischen Material wie Gummi besteht oder ein solches Material umfasst. Besonders bevorzugt wird aber eine Schraubenfeder oder wenigstens eine Schraubenfeder eingesetzt.

In bevorzugten Weiterbildungen ist ein Hub der Ergänzungsfeder kleiner als ein (Innen- oder Außen-) Durchmesser wenigstens eines der Rohre des Rohrsystems. Insbesondere ist der Hub der Ergänzungsfeder kleiner als der halbe (Innen- oder Außen-) Durchmesser des ersten Rohres oder des Standrohrs. Vorzugsweise ist der Hub der Ergänzungsfeder kleiner als 60 mm, insbesondere kleiner 50 mm und besonders bevorzugt kleiner 40 mm. Der Hub kann beispielsweise 6 mm, 8 mm, 10 mm, 12 mm, 14 mm oder 16 mm oder mehr betragen. Besonders bevorzugt ist der Hub der Ergänzungsfeder kleiner als ein Zehntel des Hubs der Luftfeder.

Vorzugsweise liegt eine Federkonstante der Ergänzungsfeder zwischen (etwa) 10 N/mm und 50 N/mm. In einer konkreten Ausgestaltung hat sich eine Federkonstante der Ergänzungsfeder von 28 N/mm (+/-10% oder +/- 6 N/mm) bei einem Federweg von 8 mm oder 10 mm (+/-2 mm) als vorteilhaft herausgestellt. Tatsächlich ist die Ergänzungsfeder dann über einen Federweg des Federsystems von etwa 15 mm - 50 mm wirksam.

Es ist bevorzugt, den Federweg und die Federkonstante der Ergänzungsfeder so zu wählen, dass ein sanfter Übergang in der Federkennlinie erzielt wird. Ein elastischer Endanschlag an der Ergänzungsfeder kann zu einem sanften und stetigen Übergang beitragen.

In bevorzugten Weiterbildungen umfasst die Ergänzungsfeder eine Endanschlagsdämpfung. Eine solche Endanschlagsdämpfung kann beispielsweise durch einen elastischen Ring wie zum Beispiel einen O-Ring oder durch einen Quadring oder einen anderen elastischen Ring zu Verfügung gestellt werden. Ein solcher elastischer Ring kann an beiden Enden der Ergänzungsfeder vorgesehen sein. Insbesondere wird wenigstens ein elastischer Ring zur Verfügung gestellt, der beim Ausfedern eine Endanschlagsdämpfung bewirkt.

Vorzugsweise ist ein Verhältnis der Federkraft der Ergänzungsfeder zu einer Federkraft der Positivluftfeder in einer SAG-Position kleiner als 4:1 und ist vorzugsweise größer als 1:4.

Vorzugsweise ist ein Verhältnis der Federkraft der Ergänzungsfeder zu einer Federkraft der Positivluftfeder bei maximalen Hub der Ergänzungsfeder kleiner als 20:10 und ist größer als 1:10. Insbesondere ist ein Verhältnis der Federkraft der Ergänzungsfeder zu einer Federkraft der Positivluftfeder bei maximalen Hub der Ergänzungsfeder kleiner als 15:10 und ist größer als 2:10.

Insbesondere das Verhältnis der Federkraft der Ergänzungsfeder zu einer Federkraft der Positivluftfeder bei maximalen Hub der Ergänzungsfeder kleiner als 3:4 und ist größer als 1:4. Das gilt insbesondere bei einer empfohlenen Einstellung des Luftdruckes für einen mittelschweren Fahrer von 80 kg oder 90 kg Gewicht.

Insbesondere ist ein Verhältnis des Hubes der Positivluftfeder zu einem Federweg der Ergänzungsfeder größer oder gleich als ein Verhältnis des Volumens der Positivkammer zu einem Volumen der Negativkammer in der ausgefahrenen Position.

Vorzugsweise ist ein Verhältnis des Volumens der Positivkammer zu einem Volumen der Negativkammer in der ausgefahrenen Position größer als 1,6 und vorzugsweise kleiner 15:1 und insbesondere kleiner 10:1. In vorteilhaften Ausführungen liegt das Verhältnis des Volumens der Positivkammer zu einem Volumen der Negativkammer in der ausgefahrenen Position zwischen 4:1 und 12:1 und vorzugsweise zwischen 6:1 und 8:1.

Es ist sehr interessant und vorteilhaft, das Verhältnis von dem Hub der Ergänzungsfeder zum Verhältnis zwischen den Volumen den Positiv- und Negativkammern der Positivluftfeder so zu gestalten, dass eine hohe Linearität der finalen Federkennlinie der Stoßeinrichtung und insbesondere Federgabel erreicht wird. Das wird über die vorgenannten Parameter erreicht.

Um mögliche Nachteile einer Luftfederung mit Positiv- und Negativkammern einer Luftfeder zu kompensieren, wird ein Verhältnis von Positiv- zu Negativvolumen im ausgefahrenen Zustand von 1,6 oder grösser als 1,6 gewählt. Dann ist es vorteilhaft, dass die Ergänzungsfeder so gewählt ist, dass ein Verhältnis vom Gesamthub der Stoßeinrichtung bzw. Federgabel zum Hub der Ergänzungsfeder grösser als 1,6 ist.

In konkreten Ausgestaltungen ist ein Verhältnis der Volumina der Positivkammer zu der Negativkammer größer 1,6. Ein Verhältnis des gesamten Hubes zu einem Hub der Ergänzungsfeder ist bei einem Gesamthub von z. B. 130 mm größer als 4:1 und insbesondere größer als 8:1 und vorzugsweise größer 12:1 und kann 15:1 erreichen und überschreiten. Vorzugsweise ist das Verhältnis kleiner als 35:1 und insbesondere kleiner als 30:1. Vorzugsweise beträgt das Verhältnis bei einem Gesamthub von z. B. 130 mm etwa 16:1.

Bei einem Gesamthub von z. B. 170 mm ist das Verhältnis des gesamten Hubes zu einem Hub der Ergänzungsfeder auch größer als 4:1 und insbesondere größer als 8:1 und vorzugsweise größer 12:1 und kann 15:1 und 20:1 erreichen und überschreiten. Vorzugsweise ist das Verhältnis kleiner als 35:1 und insbesondere kleiner als 30:1. Vorzugsweise beträgt das Verhältnis bei einem Gesamthub von z. B. 170 mm etwa 21:1.

Besonders bevorzugt liegt (unabhängig von dem gesamten Hub) das das Verhältnis des gesamten Hubes zu einem Hub der Ergänzungsfeder zwischen 10:1 und 25:1.

In allen Ausgestaltungen ist es bevorzugt, dass die Ergänzungsfeder einstellbar und/oder austauschbar ist. Dabei ist es möglich, dass ein Hub der Ergänzungsfeder einstellbar ist. Es ist ebenso bevorzugt, dass eine Federkraft der Ergänzungsfeder einstellbar ist. Möglich ist es auch, dass anstelle einer Ergänzungsfeder zwei oder mehr Ergänzungsfedern eingesetzt werden, um beispielsweise die Federsteifigkeit zu erhöhen.

In allen Ausgestaltungen ist es bevorzugt, dass die Ergänzungsfeder in einem Führungsgehäuse untergebracht ist. Dabei kann das Führungsgehäuse einstellbar und/oder austauschbar ausgebildet sein. In einfachen Ausgestaltungen ist es so möglich, durch den Austausch eines Führungsgehäuses eine Ergänzungsfeder mit anderen Federeigenschaften einzusetzen. Das Führungsgehäuse kann dazu an beiden Enden Anschlüsse bieten, um das Führungsgehäuse an dem zweiten Rohr bzw. an der Kolbenstange (einfach) austauschbar zu befestigen.

Vorzugsweise ist in dem ersten Rohr eine Negativfeder ausgebildet, welche eine der Positivluftfeder entgegen gerichtete Kraft ausübt. In diesem Sinne belastet die Negativfeder das Rohrsystem in einen eingefahrenen Zustand vor. Besonders bevorzugt ist die Kraft der Positivluftfeder größer als die Kraft der Negativfeder, sodass die insgesamt wirkende Kraft das Rohrsystem in die ausgefahrene Stellung bzw. in die ausgefahrene Position vorbelastet.

Besonders bevorzugt ist die Negativfeder als Luftfeder ausgebildet. Der bewegliche Kolben teilt ein Volumen in dem ersten Rohr vorzugsweise in ein Positivvolumen der Positivfeder und ein Negativvolumen der Negativfeder variabel ein. Durch ein Austauchen der Kolbenstange wird dann das Positivvolumen der Positivfeder vergrößert, während das Negativvolumen der Negativfeder entsprechend verkleinert wird.

In allen Ausgestaltungen ist es bevorzugt, dass wenigstens ein Bypass vorgesehen ist, der an einer vorbestimmten Kolbenstellung einen Druckausgleich zwischen der Positivluftfeder und der Negativfeder gewährleistet. Dadurch werden vorteilhafte Federeigenschaften erzielt. Außerdem reicht es in solchen Ausgestaltungen aus, die Positivluftfeder unter den gewünschten Druck zu setzen. In der vorbestimmten Kolbenstellung erfolgt ein Druckausgleich zwischen der Positivluftfeder und der Negativfeder, sodass die Positivluftfeder und die Negativfeder (praktisch immer) in einem geeigneten Druckverhältnis zueinanderstehen.

In allen Ausgestaltungen ist es möglich, dass eine Topout-Feder vorgesehen ist, welche insbesondere über weniger als einem ersten Drittel des Federweges wirksam ist. Besonders bevorzugt wirkt die Topout-Feder über weniger als 50 mm, 30 mm oder 10 mm und insbesondere weniger als 5 mm im ersten Drittel des Federwegs. Insbesondere wirkt die Topout-Feder in vollausgefedertem Zustand. Vorzugsweise umgibt die Topout-Feder die Kolbenstange und wirkt zwischen dem Kolben und dem zweiten Ende des ersten Rohres. Das erste Ende des ersten Rohres entspricht dem ersten Ende des Rohrsystems und das zweite Ende des zweiten Rohres entspricht dem zweiten Ende des Rohrsystems.

In allen Ausgestaltungen ist es besonders bevorzugt, dass wenigstens ein Dämpfungssystem umfasst ist. Dabei ist es bevorzugt, dass die Dämpfung über den vollständigen Federweg aktiv ist.

Vorzugsweise ist wenigstens ein Teil des Dämpfungssystems in einem zweiten Rohrsystem angeordnet. Dabei kann das Dämpfungssystem teilweise oder vorzugsweise vollständig in dem zweiten Rohrsystem untergebracht oder befestigt oder ausgebildet sein. Möglich ist es auch, dass sich ein erster Teil des Dämpfungssystems in dem ersten Rohrsystem und ein zweiter Teil des Dämpfungssystems in dem zweiten Rohrsystem befindet. Möglich ist es auch, dass sich wenigstens ein Teil des Dämpfungssystems außerhalb des Rohrsystems befindet.

In allen Ausgestaltungen ist es bevorzugt, dass in dem ersten Rohr des Federsystems eine Zylindereinrichtung aufgenommen ist, in welcher der Kolben beweglich aufgenommen ist. Das bedeutet, dass der Kolben nicht auf der Innenseite des ersten Rohres gleitet, sondern entlang der Innenseite der Zylindereinrichtung. Dadurch ist die Fläche des Kolbens kleiner als der Querschnitt des ersten Rohres.

Vorzugsweise ist die Zylindereinrichtung wenigstens abschnittsweise von einem zusätzlichen Hohlraum umgeben, der wie das Volumen der Positivkammer der Zylindereinrichtung zu dem Volumen der Positivluftkammer beiträgt. Das bedeutet dann, dass der Druckanstieg bei einer Komprimierung der Positivluftkammer geringer ist als ohne den zusätzlichen Hohlraum. Dadurch wird eine noch bessere Linearisierung der Federkennlinie erzielt. Vorzugsweise ist die Zylindereinrichtung wenigstens abschnittsweise von einem weiteren Hohlraum umgeben, der wie das Volumen der Negativkammer der Zylindereinrichtung zu dem Volumen der Negativluftkammer beiträgt. Auch hier wird der Verlauf der Federkennlinie linearisiert.

Vorzugsweise ist die Zylindereinrichtung fest mit dem ersten Rohr verbunden. Vorzugsweise sind Strömungsöffnungen zu dem zusätzlichen Hohlraum und zu dem weiteren Hohlraum vorgesehen. Durch diese Strömungsöffnungen kann ein ungestörter Luftaustausch bzw. Gasaustausch zwischen dem zusätzlichen Hohlraum und der Positivkammer und zwischen dem weiteren Hohlraum und der Negativkammer erfolgen.

Vorzugsweise sind der zusätzliche Hohlraum und der weitere Hohlraum axial benachbart angeordnet. Besonders bevorzugt sind der zusätzliche Hohlraum und der weitere Hohlraum durch bauliche Maßnahmen und/oder wenigstens eine Dichtung voneinander getrennt.

Eine weitere , nicht beanspruchte, Stoßeinrichtung, für die sich Anmelderin Schutz zu beantragen vorbehält, ist für den Einsatz an einem wenigstens teilweise muskelbetriebenen Zweirad und insbesondere an einem Fahrrad vorgesehen. Die Stoßeinrichtung umfasst wenigstens ein Rohrsystem mit zwei teleskopierbaren oder teleskopierenden Rohren, wobei sich das Rohrsystem von einem ersten Ende zu einem zweiten Ende erstreckt. Es ist ein Federsystem vorgesehen, welches zwischen den beiden Enden nämlich dem ersten und dem zweiten Ende des Rohrsystems wirksam ist und welches die beiden Rohre in eine (wenigstens teilweise) ausgefahrene Position vorbelastet. Das Federsystem umfasst wenigstens eine Gasfeder mit einem Luftvolumen. Das Federsystem umfasst eine Zylindereinrichtung in einem der Rohre. Die Gasfeder weist eine im Inneren der Zylindereinrichtung ausgebildete und durch einen beweglichen Kolben begrenzte Luftkammer auf. Die Luftkammer ist mit einem außerhalb der Zylindereinrichtung ausgebildeten Hohlraum verbunden, der wie die Luftkammer (im Inneren der Zylindereinrichtung) zu dem Volumen der Gasfeder beiträgt.

Diese, nicht beanspruchte, Stoßeinrichtung kann des weiteren ein (weiteres) Merkmal oder alle Merkmale der zuvor beschriebenen Ausgestaltung aufweisen. Auch bei dieser Stoßeinrichtung kann eine Ergänzungsfeder zwischen der Kolbenstange und dem zweiten Rohr vorgesehen sein.

Auch diese Stoßeinrichtung hat viele Vorteile. Eine solche Stoßeinrichtung erlaubt eine bessere Linearisierung der Federkennlinie. Durch den Hohlraum wird die entsprechende Luftkammer vergrößert, sodass ein Einfedern oder ein Ausfedern des Kolbens nicht mehr einen derartigen Einfluss auf den Druckverlauf in der Luftkammer aufweist. Auch bei dieser Stoßeinrichtung kann auf den Begriff Stoßdämpfer präzisiert werden.

Vorzugsweise ist die Zylindereinrichtung wenigstens abschnittsweise (unmittelbar) von wenigstens einem Hohlraum umgeben, der wie die Luftkammer im Inneren der Zylindereinrichtung zu dem Volumen der Gasfeder beiträgt.

Vorzugsweise weist die Gasfeder eine im Inneren der Zylindereinrichtung ausgebildete Luftkammer auf, die durch einen im Inneren der Zylindereinrichtung angeordneten beweglichen Kolben begrenzt wird.

Es ist möglich, dass die Stoßeinrichtung (wenigstens) zwei Luftfedern aufweist, nämlich eine Positivluftfeder und/oder eine Negativfeder bzw. Negativluftfeder. Dabei können beide Luftfedern jeweils (wenigstens) einen zugehörigen Hohlraum aufweisen. Vorzugsweise ist die Zylindereinrichtung fest mit dem ersten Rohr verbunden. Insbesondere ist die Zylindereinrichtung von einem zusätzlichen Hohlraum und/oder einem weiteren Hohlraum umgeben. Besonders bevorzugt ist die Zylindereinrichtung fest mit dem ersten Rohr verbunden und weist Strömungsöffnungen zu dem zusätzlichen Hohlraum und zu dem weiteren Hohlraum auf.

In allen , nicht beanspruchten, Ausgestaltungen weist eine Stoßeinrichtung vorteilhafte Eigenschaften auf. Eine Ergänzungsfeder in Form eines elastischen Elementes, welches sich im ersten Bereich des Federwegs immer weiter komprimiert, bis es auf Block ist, kann den ersten Bereich der Federkennlinie deutlich linearer gestalten. In diesem Bereich kann die Reibung des Federsystems insgesamt gesenkt werden, da sich das elastische Element bzw. die Ergänzungsfeder reibungslos oder reibungsarm bewegen kann, bevor die Reibung der Kolbenstangendichtungen und Kolbendichtungen überwunden sind.

Eine solche Stoßeinrichtung kann auch mit einer eingesetzten Zylindereinrichtung kombiniert werden. Bei einer in das erste Rohr eingesetzten Zylindereinrichtung wird (praktisch) ein Doppelrohr verwendet, mit dem eine verbesserte Federkennlinie ermöglicht wird. Dadurch kann eine sehr feinfühlige Federgabel hergestellt werden. Bei Federbewegungen bleibt das Dämpfungssystem aktiv, während die Ergänzungsfeder ein- und ausfedert, sodass die Federgabel kontrollierbar bleibt.

In vorteilhaften Ausgestaltungen wird die Kolbenstange über die Ergänzungsfeder oder durch ein weiteres zusätzliches Element oder durch die Dämpfungsseite in Zugrichtung festgehalten, damit sich die obere Einheit nicht von der unteren Einheit trennen kann. Vorzugsweise ist die Ergänzungsfeder komplett komprimiert, bevor die Federgabel den Nennfederweg erreicht. Möglich ist es aber auch, dass die Ergänzungsfeder vor dem Erreichen des Nennfederwegs noch nicht komplett komprimiert ist.

Bei einer SAG-Position von z. B. 25 % oder 30 % ist es möglich, dass die Ergänzungsfeder schon vollständig eingefedert bzw. komprimiert (auf Block) ist.

Vorzugsweise sind der zusätzliche Hohlraum und die Positivkammer vollständig innerhalb des ersten Rohres aufgenommen. Vorzugsweise sind der weitere Hohlraum und die Negativkammer vollständig innerhalb des ersten Rohres aufgenommen. Vorzugsweise ist die Zylindereinrichtung vollständig innerhalb des ersten Rohres aufgenommen.

Durch den Einsatz einer Zylindereinrichtung, die zur Ausgestaltung eines Doppelrohres führt, können die jeweiligen Volumina der Positivluftfeder und der Negativfeder in weiten Grenzen frei gewählt werden. Bei der Größe der einzelnen Volumina ist es vorteilhaft, wenn sich das Volumen bei komplett ausgefederter Federgabel im Verhältnis zum Volumen bei komplett eingefedertem Zustand möglichst wenig ändert. Die Platzverhältnisse im Inneren einer Federgabel sind aber durch die Einbaudimensionen und durch die Rohrdurchmesser nicht beliebig wählbar. Durch den Einsatz eines inneren Rohres bzw. einer Zylindereinrichtung, in welcher der Kolben geführt wird, wird das eigentliche, in der Federgabel vorhandene Volumen nicht größer. Dadurch, dass aber ein kleinerer Kolben verwendet wird, welcher ein kleineres Volumen verdrängt, wird die Volumenänderung zwischen ausgefedertem und eingefedertem Zustand kleiner und somit sind linearere Kennlinien möglich.

Weitere Vorteile und Merkmale der vorliegenden Erfindung ergeben sich durch die Ausführungsbeispiele, die im Folgenden mit Bezug auf die beiliegenden Figuren erläutert werden.

In den Figuren zeigen:
- Figur 1: eine schematische Seitenansicht eines Mountainbikes;
- Figur 2: eine Vorderansicht der Federgabel des Mountainbikes aus Figur 1;
- Figur 3: einen schematischen Querschnitt durch drei unterschiedlich weit eingefederte Positionen der Federgabel nach Figur 2;
- Figur 4: ein vergrößertes Detail aus Figur 3 in der Grundposition;
- Figur 5: ein vergrößertes Detail aus Figur 3 in der Übergangsposition;
- Figur 6: ein vergrößertes Detail aus Figur 3 in einer weiteren Position;
- Figur 7: einen Querschnitt durch das andere Bein der Federgabel in einer ausgefederten Position;
- Figur 8: ein vergrößertes Detail aus Figur 7;
- Figur 9: eine Darstellung gemäß Figur 8 in einer mittleren Position;
- Figur 10: eine Darstellung gemäß Figur 8 in einer Endposition;
- Figur 11: ein weiteres Federsystem für die Federgabel nach Figur 2; und
- Figur 12: ein vergrößertes Detail aus Figur 11.

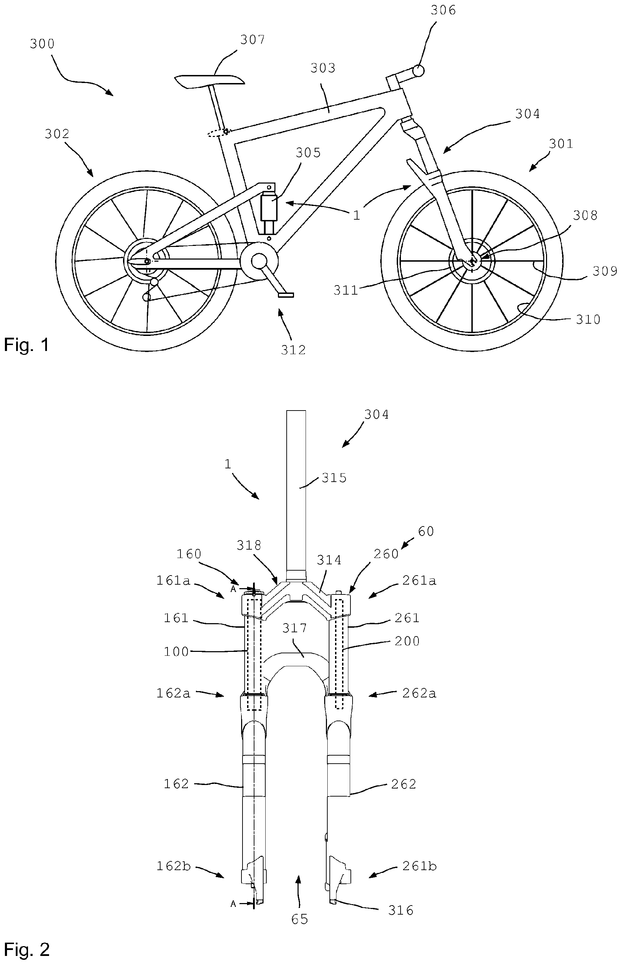

Figur 1 zeigt eine schematische Darstellung eines Mountainbikes als Fahrrad bzw. Zweirad 300. Das Fahrrad kann über einen elektrischen Hilfsantrieb verfügen. Das Fahrrad weist ein Vorderrad 301, ein Hinterrad 302, einen Rahmen 303, zwei Stoßeinrichtungen 1 als Stoßdämpfer, nämlich eine Federgabel 304 und einen Hinterraddämpfer 305, einen Lenker 306 und einen Sattel 307 auf. Als Antrieb 312 sind Pedale und hier eine Kettenschaltung vorgesehen. Es können Scheibenbremsen 311 vorgesehen sein. Das Vorderrad 301 und das Hinterrad 302 sind jeweils über eine Schnellspannvorrichtung an der Gabel 304 bzw. dem Rahmen 303 befestigt. Die Räder weisen jeweils Speichen 309 und eine Felge 310 sowie eine Nabe 308 auf. Hier umfasst das Mountainbike 300 zwei Stoßdämpfer 1, nämlich die Federgabel 304 und den Hinterradstoßdämpfer 305.

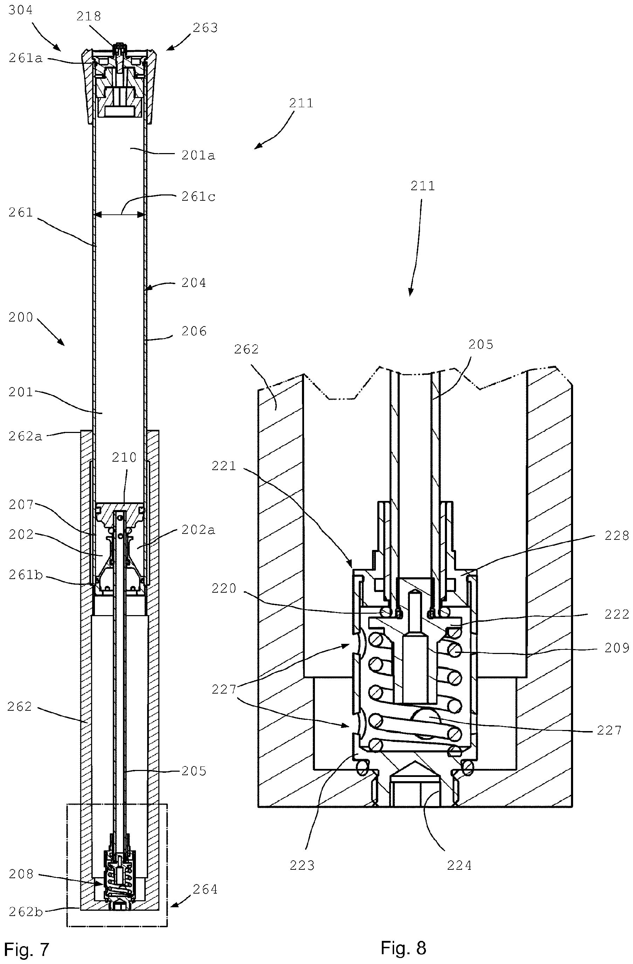

Figur 2 zeigt die Federgabel 304 des Mountainbikes 300 aus Figur 1 in einer Vorderansicht. Die Federgabel 304 umfasst einen Gabelschaft 315, der mit der oberen Einheit 318 verbunden ist. Die obere Einheit 318 umfasst des Weiteren die Gabelkrone 314 und die Standrohre 161 und 261. Die obere Einheit 318 wirkt mit der unteren Einheit 317 zusammen, die die Tauchrohre 162 und 262 umfasst. An den unteren Enden 162b, 262b der Tauchrohre 162 und 262 ist jeweils ein Ausfallende 316 vorgesehen. An den oberen Enden 161a und 261a der Standrohre 161 und 261 ist die Gabelkrone 314 vorgesehen (vgl. Fig. 7). Die oberen Enden 162a und 262a der Tauchrohre 162 und 262 umgreifen die unteren Enden 161b und 261b der Standrohre 161 und 261. Zwischen den Rohrsystemen 160 und 260 ist der Radaufnahmeraum 65 ausgebildet.

Die Federgabel 304 umfasst hier zwei Rohrsysteme 60, nämlich das Rohrsystem 160, in dem das Dämpfungssystem 100 untergebracht ist, und das Rohrsystem 260, in dem das Federsystem 200 untergebracht ist.

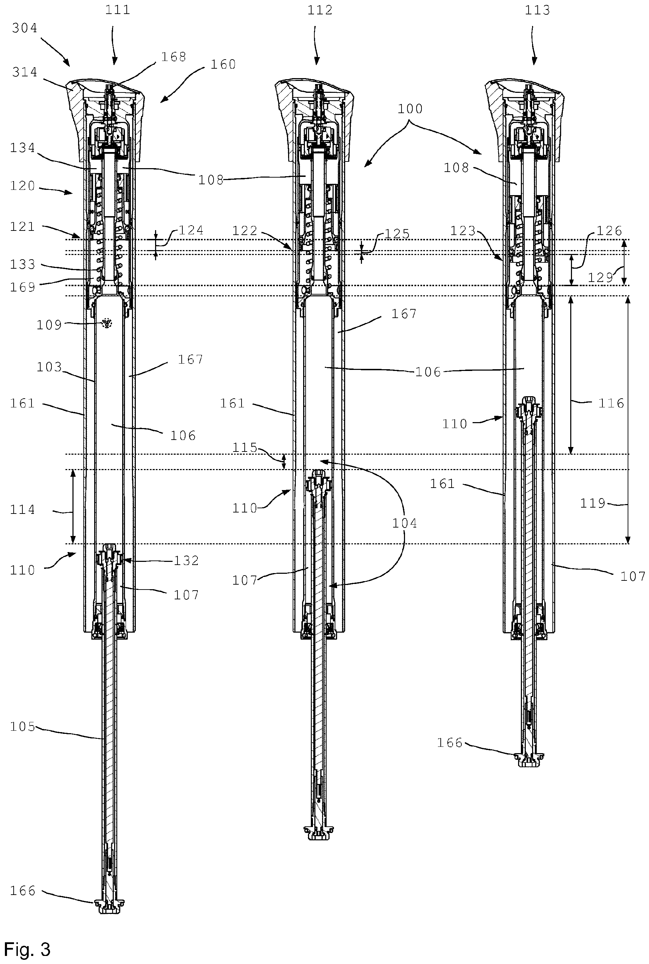

In Figur 3 sind in schematischen Querschnitten nebeneinander drei Darstellungen des Rohrsystems 160 abgebildet. In Figur 3 ist links das Rohrsystem 160 in der Grundposition 111 oder einer Anfangsposition dargestellt, während in der Mitte das Rohrsystem 160 in einer Übergangsposition 112 und rechts in einer weiter eingetauchten Position 113 dargestellt ist.

Am oberen Ende des Rohrsystems 160 ist jeweils die Gabelkrone 314 erkennbar. Am oberen Ende des Rohrsystems 160 befindet sich ein Bedienelement 168 zur Einstellung der Dämpfungseigenschaften.

Das Rohrsystem 160 umfasst ein Standrohr 161 und das hier nicht abgebildete Tauchrohr 162, welches im montierten Zustand die Kolbenstange 105 umgibt.

Im Inneren des Standrohrs 161 ist ein Dämpferzylinder 103 fest aufgenommen. Der Kolben bzw. Dämpferkolben 110 teilt das Dämpfungsvolumen 104 in eine erste Dämpfungskammer 106 und eine zweite Dämpfungskammer 107 variabel auf. In dem Kolben 110 ist eine Drosseleinheit 132 angeordnet, die den Übertritt des Dämpfungsfluids 109 von der ersten Dämpfungskammer 106 in die zweite Dämpfungskammer 107 und umgekehrt dämpft.

Beim Eintritt der Kolbenstange 105 in den Dämpferzylinder 103 tritt auch ein Volumenanteil der Kolbenstange 105 in den Dämpferzylinder 103 ein. Das entsprechende Volumen der Kolbenstange 105 muss aus dem Dämpferzylinder 103 verdrängt werden und tritt nach oben aus dem Dämpferzylinder 103 aus und wird in die Zusatzkammer 108 geleitet.

Die Zusatzkammer 108 wird durch einen Trennkolben 120 abgeteilt und stellt ein Ausgleichsvolumen 134 zur Verfügung. Der Trennkolben 120 wird durch eine Vorspanneinrichtung 133 vorgespannt.

In der in Figur 3 links dargestellten Position befindet sich die Federgabel 304 bzw. das Dämpfungssystem 100 in der Grundposition 111, die maximal ausgefedert sein kann oder aber z. B. der SAG-Position entspricht, die erreicht wird, nachdem sich der Fahrer im Stillstand auf das Fahrrad setzt.

Am unteren Ende der Kolbenstange 105 ist ein unterer Anschluss 166 ausgebildet, der mit dem in Figur 3 nicht dargestellten Tauchrohr verbunden wird. Radial zwischen der Außenwandung des Dämpferzylinders 103 und der Innenwandung des Standrohrs 161 ist ein (regelmäßig mit Luft gefüllter) Hohlraum 167 ausgebildet.

Oberhalb des Dämpferzylinders 103 befindet sich ein Hohlraum 169, in dem die Vorspanneinrichtung 133 angeordnet ist, die den Trennkolben 120 vorgespannt. Dargestellt ist hier eine Schraubenfeder 133 als Vorspanneinrichtung. Möglich ist es auch, dass der Hohlraum 169 als (ergänzende oder einzige) Luftfeder und somit als Vorspanneinrichtung 133 dient, um den Trennkolben 120 vorzuspannen.

In der Mitte von Figur 3 ist das Rohrsystem 160 der Federgabel 304 in der Übergangsposition 112 dargestellt. In dieser Übergangsposition 112 ist der Kolben 110 weiter in den Dämpferzylinder 103 eingetaucht. Dementsprechend hat sich der Trennkolben 120 aus der Grundposition 121 in die Übergangsposition 122 verschoben. Der Trennkolben hat einen ersten Wegabschnitt 124 zurückgelegt, während der Kolben 110 einen ersten Wegabschnitt 114 zurückgelegt hat. Die Wegabschnitte 114 und 124 verhalten sich proportional zueinander. Der Kolben 110 erreicht hier den Übergangsabschnitt 115 und der Trennkolben 120 den Übergangsabschnitt 125, in der der Trennkolben 120 beginnt, eine Öffnung 138 (bzw. viele auf dem Umfang verteilte Öffnungen 138) zu verschließen.

Der Dämpferzylinder 103 umfasst ein Dämpfungsvolumen 104, welches durch die erste Dämpfungskammer 106 und die zweite Dämpfungskammer 107 gebildet wird.

Wenn das Rohrsystem 160 noch weiter einfedert, ergibt sich schließlich die in Figur 3 rechts dargestellte Position, in der sich das Rohrsystem 160 und somit der Kolben 110 in einer weiter eingetauchten Position 113 befinden. Diese eingetauchte Position 113 befindet sich im zweiten Wegabschnitt 116 zwischen dem Übergangsabschnitt und der Endposition. Der zweite Wegabschnitt 116 erstreckt sich vorzugsweise über mehr als die Hälfte des Kolbenhubs 119. Vorzugsweise beträgt eine Länge des ersten Wegabschnitts 114 zu dem Kolbenhub 119 zwischen einem Fünftel und zwei Fünftel. In bevorzugten Ausgestaltungen beträgt der Anteil des ersten Wegabschnitts an dem Kolbenhub 119 etwa ein Drittel (+/- 10%).

In anderen Ausgestaltungen kann eine Länge des ersten Wegabschnitts 114 bis zu der Hälfte oder sogar 60% des Kolbenhubs 119 (oder mehr) betragen. Der zweite Wegabschnitt verkürzt sich dann entsprechend auf 30% oder 40% und der Übergangsabschnitt erstreckt sich über den Restanteil dazwischen.

Der Kolben 110 befindet sich in der rechten Darstellung in Figur 3 in der eingetauchten Position 113. Dementsprechend hat der Trennkolben 120 eine eingetauchte Position 123 eingenommen und befindet sich in dem zweiten Wegabschnitt 126. Der Trennkolben 120 kann einen Kolbenhub 129 zurücklegen.

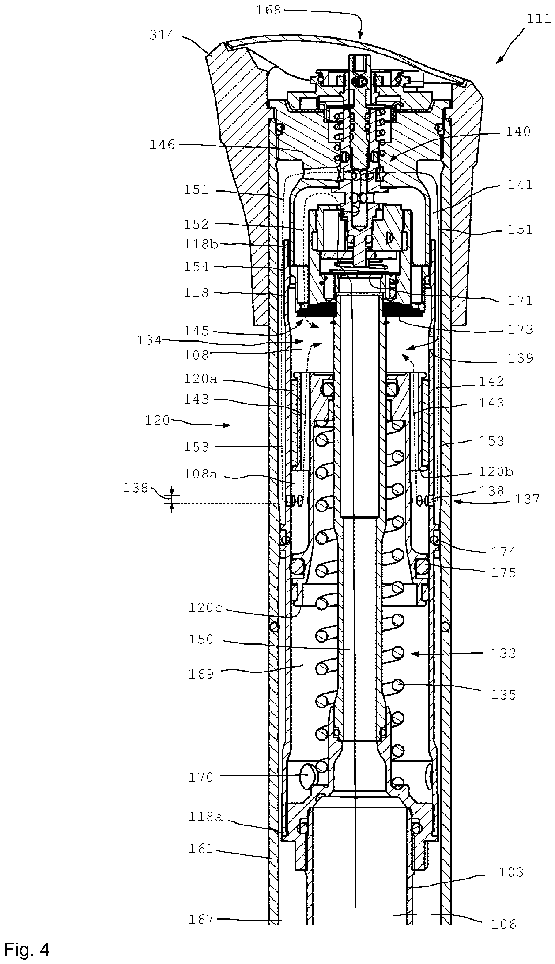

Figur 4 zeigt ein vergrößertes Detail aus der linken Darstellung von Figur 3. Dargestellt ist der obere Teil des Rohrsystems 160, wobei die Gabelkrone 314 am oberen Ende im Schnitt erkennbar ist. Einstellbar ist die Dämpfung über das Bedienelement 168.

Oberhalb des Dämpferzylinders 103 ist die Vorspanneinrichtung 133 angeordnet, die eine Stahlfeder 135 und/oder einer Gasfeder 136 umfassen kann, um den Trennkolben 120 nach oben hin vorzubelasten. Der Trennkolben trennt die Zusatzkammer 108 ab. Der Trennkolben 120 weist eine reibungsarme Buchse 120a auf dem äußeren Umfang auf. Während in einem zentralen Bereich des Trennkolbens die Vorbelastungseinrichtung 133 den Trennkolben 120 nach oben drückt, befindet sich ein Teil 108a der Zusatzkammer 108 radial außen von dem Trennkolben 120 und ein weiterer Teil oberhalb des Trennkolbens 120.

Der Dämpferzylinder 103 ist in das Standrohr 161 so eingebaut, dass sich ein radialer Leerraum bzw. Hohlraum 167 ergibt.

Im Ausführungsbeispiel ist auf das obere Ende des Dämpferzylinders 103 ein Einsatz 118 aufgesetzt. Das untere Ende 118a des Einsatzes 118 kann beispielsweise mit dem Abschluss des Dämpferzylinders 103 verschraubt sein. Der Einsatz 118 ist über wenigstens eine Dichtung 174 gegenüber der Innenfläche des Standrohrs 161 abgedichtet. Oberhalb der Dichtung 174, die sich in der Darstellung gemäß Figur 4 etwa in der Höhe Dichtung 175 des Trennkolbens 120 befindet, ist ein radialer Spalt 154 zwischen dem Einsatz 118 und der Wandung des Standrohrs 161 ausgebildet, der zum Transport von Dämpfungsfluid in die Zusatzkammer 108 genutzt wird.

In dem Einsatz 118 sind wenigstens zwei radiale Löcher (Löcherreihen oder Löcherserien) oder Öffnungen 138 und 139 ausgebildet. Die Öffnungen 138 und 139 sind in axialer Richtung des Einsatzes 118 versetzt angeordnet. Hier befinden sich in der Darstellung gemäß Figur 4 die Öffnungen 138, von denen eine Mehrzahl auf dem Umfang des Einsatzes 118 verteilt angeordnet ist, zwischen dem unteren Ende 120b der reibungsarmen Buchse 120a und der Dichtung 175 am unteren Ende 120c des Trennkolbens 120. Oberhalb der Öffnungen 139 wird im Zwischenraum zwischen dem Einsatz 118 und der Innenwandung des Standrohres 161 ein (erster) Kanal 141 gebildet. Unterhalb der Öffnungen 138 wird bis zu den Öffnungen 139 im Zwischenraum zwischen dem Einsatz 118 und der Innenwandung des Standrohres 161 ein (zweiter) Kanal 142 gebildet.

Die Öffnungen 139, von denen beispielhaft eine Öffnung 139 in Figur 4 eingezeichnet ist, sind oberhalb des oberen Endes des Trennkolbens 120 in der radialen Wandung des Einsatzes 118 ausgebildet.

Die Öffnungen 138 bilden ein Ventil 137 für den Übertritt des Dämpfungsfluids 109 aus dem Kanal 142 in die Zusatzkammer 108. Ebenso bildet auch die Öffnung 139 bzw. bilden die Öffnungen 139 ein Ventil für den Übertritt des Dämpfungsfluids 109 aus dem Kanal 141 in die Zusatzkammer 108.

Am oberen Ende 118b des Einsatzes 118 ist ein Steuereinsatz 146 in den Einsatz 118 eingeführt, sodass das untere Ende 118a des Einsatzes mit dem Dämpferzylinder 103 und das obere Ende 118b des Einsatzes 118 mit dem Steuereinsatz 146 verbunden ist.

Im Ausführungsbeispiel ist der radiale Hohlraum 167 zwischen dem Dämpferzylinder 103 und dem Standrohr 161 über Öffnungen 170 mit dem Hohlraum 169 verbunden, in dem die Vorspanneinrichtung 133 für den Trennkolben 120 untergebracht ist. Möglich ist es auch, eine Gasfeder 136 zur Vorbelastung des Trennkolbens 120 einzusetzen. Dann sind die Öffnungen 170 regelmäßig verschlossen oder nicht vorhanden.

Bei einem Einfedervorgang strömt Dämpfungsfluid 109 durch den zentralen Kanal entlang des Strömungswegs 150 nach oben in den Steuereinsatz 146 hinein. Bei schwächeren Stößen öffnet nur die Drosseleinrichtung 140 für Low-Speed und das Dämpfungsfluid kann in der in Figur 4 dargestellten ausgefederten Position entlang des Strömungsweges 151 in den Radialspalt 154 zwischen dem Einsatz 118 und der Innenwandung des Standrohrs 161 eintreten.

Von dem Radialspalt 154 kann das Dämpfungsfluid in der in Figur 4 dargestellten weiter ausgefederten Position 111 (z. B. die Grundposition 111) durch die Öffnungen 138 und 139 in die Zusatzkammer 108 eintreten. Die Öffnungen 138 und 139 stellen insgesamt einen großen Strömungsquerschnitt zu Verfügung, sodass der Einfedervorgang in der Druckstufe in der dargestellten Grundposition 111 nur leicht gedämpft wird. Der Strömungsweg 151 durch die Öffnungen 139 ist mit einem durchgezogenen Pfeil eingezeichnet. Der Strömungsweg 153 durch die Öffnungen 138 ist mit einem strichpunktierten Pfeil 153 eingezeichnet. Dabei verläuft der Strömungsweg zunächst entlang des Strömungsweges 151 in den Radialspalt 154. Ein Teil des Dämpfungsfluids 109 tritt durch die Öffnungen 139 direkt in die Zusatzkammer 108 über. Ein weiterer Teil strömt entlang des Radialspalts des 154 weiter durch den zweiten Kanal 142 bis zu den Öffnungen 138, die hier zu der Teilkammer 108a der Zusatzkammer 108 führen. Das in die Teilkammer 108a eingetretene Dämpfungsfluid 109 kann dann durch den Rückkanal 143 radial innen von der Buchse 120a nach oben in den Hauptteil der Zusatzkammer 108 geleitet werden.

Durch die beiden aktiven Öffnungen 138 und 139 wird im Bereich geringer Strömungsgeschwindigkeiten (Low-Speed) in der Druckstufe eine geringe Dämpfungsrate erzielt, sodass ein weiches Ansprechverhalten vorliegt.

Bei stärkeren Stößen wird zusätzlich noch durch die Drosseleinrichtung 145 der Strömungsweg 152 für große Geschwindigkeiten (High-Speed) geöffnet. Der Strömungsweg 152 ist mit einem gestrichelten Pfeil eingezeichnet. Bei stärkeren Stößen öffnet das Shim-Ventil 173, sodass auch der Strömungsweg 152 für eine effektive Überführung von Dämpfungsfluid 109 in die Zusatzkammer 108 zur Verfügung steht.

Das vorbelastete Einwegventil 171 ermöglicht in der Zugstufe das Rückströmen des Dämpfungsfluids 109 (insbesondere Öl).

Bei der in Figur 4 dargestellten Grundposition 111 wird bei leichten Stößen eine geringe Dämpfung bereitgestellt. Bei starken Stößen wird eine entsprechend stärkere Dämpfung zur Verfügung gestellt.

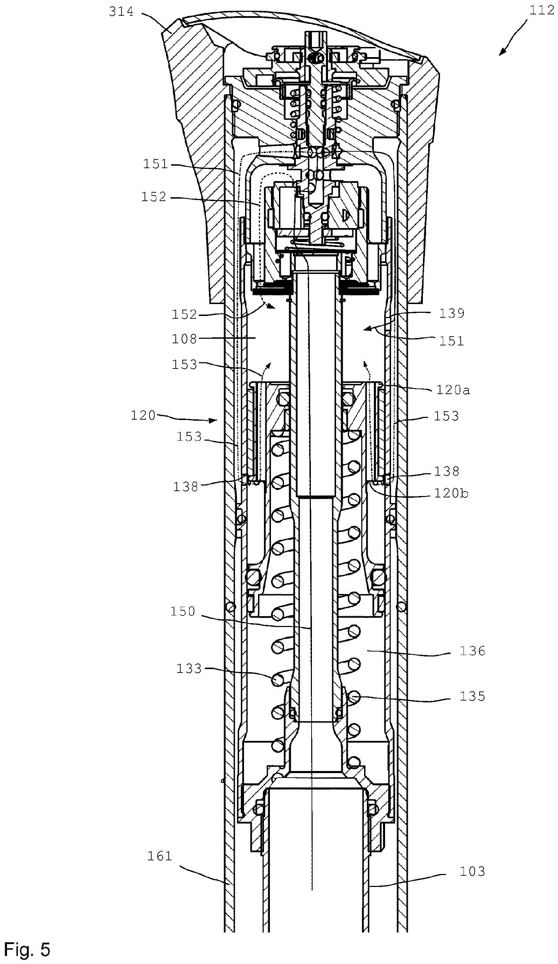

Figur 5 zeigt einen vergrößerten Bereich des Standrohrs 161 der Federgabel 304 in einer Übergangsposition 112, in der die Federgabel weiter eingefedert ist. Durch das Eintauchen der Kolbenstange 105 in den Dämpferzylinder 103 ist so viel Dämpfungsfluid 109 in die Zusatzkammer 108 verdrängt worden, dass der Trennkolben 120 entsprechend weit nach unten verschoben wurde. Dadurch wird auch das untere Ende 120b an der Buchse 120a nach unten verschoben, bis das Ende 120b in der in Figur 5 dargestellten Position schließlich beginnt, die Öffnungen 138 teilweise und schließlich vollständig zu verschließen. In diesem Bereich beginnt bzw. erstreckt sich der Übergangsabschnitt 115 des Kolbens 110 und der zugehörige Übergangsabschnitt 125 des Trennkolbens 120. Dadurch wird der strichpunktiert eingezeichnete Strömungsweg 153 für das Dämpfungsfluid 109 teilweise und schließlich vollständig verschlossen. Am Ende des Übergangsabschnitts 125 ist der Strömungsweg 153 über die Öffnungen 138 vollständig verschlossen.

Für die Dämpfung bei geringen Kolbengeschwindigkeiten steht ab dem Ende des Übergangsabschnitts 115 des Kolbens 110 bzw. der Federgabel bzw. der sich dadurch ergebenden Übergangsabschnitts 125 des Trennkolbens 120 nur noch der Strömungsweg 151 durch die Öffnung 139 aus dem Radialspalt 154 in die Zusatzkammer 108 zu Verfügung. Bei starken Stößen öffnet zusätzlich wieder das High-Speed-Ventil und es öffnet sich der Strömungsweg 152 (gestrichelt dargestellt).

In einer konkreten Ausführung beträgt der gesamte Kolbenhub 119 etwa 160 mm. Der Länge des ersten Wegabschnitts 114 beträgt ohne den Übergangsabschnitt 50 mm. Der Übergangsabschnitt 115 beginnt bei 50 mm und endet bei 70 mm. Der Übergangsabschnitt 115 und/oder 125 ist insbesondere kürzer als 25% oder 20% des maximalen Kolbenhubs 119.

Insbesondere schließt sich der zweite Wegabschnitt 114 an den Übergangsabschnitt 115 an und erstreckt sich über eine Länge von zwischen 40% und 60% des maximalen Kolbenhubs.

In Figur 5 ist zur Verdeutlichung eine Variante dargestellt, bei der gegebenenfalls keine Öffnungen 170 am unteren Ende des Einsatzes 118 vorgesehen sind. Eine solche Variante kann ohne Stahlfeder 135 und nur mit einer Gasfeder 136 betrieben werden.

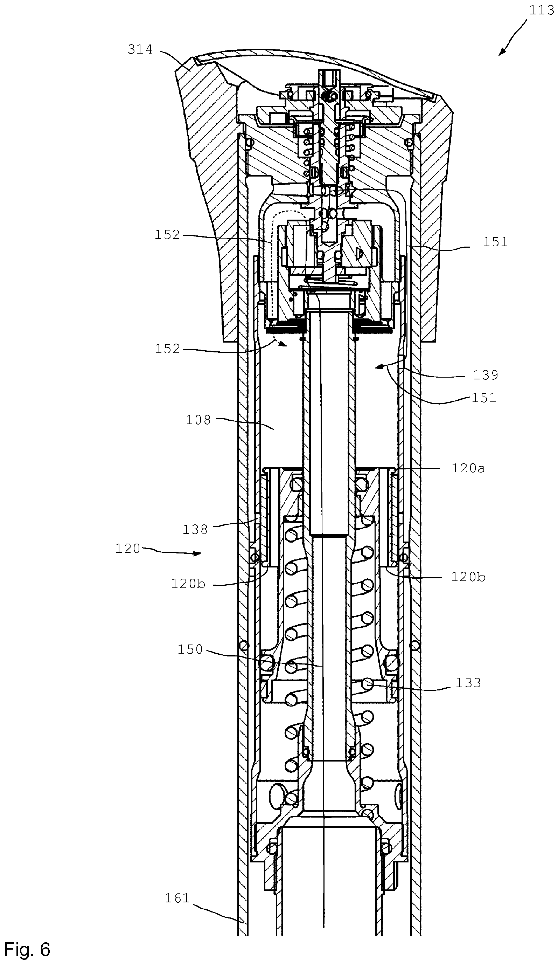

Figur 6 zeigt schließlich ein ähnliches Detail wie die Figuren 4 und 5, wobei sich die Federgabel bzw. der Kolben 110 in dem zweiten Wegabschnitt 116 befinden und somit weiter eingefedert sind. In diesem zweiten Wegabschnitt 116 befindet sich der Trennkolben 120 bzw. die Buchse 120a in dem zweiten Wegabschnitt 126 und die Buchse 120 verschließt die Öffnungen 138 vollständig. In dieser eingetauchten Position 113 steht für kleinere Stöße nur noch der Strömungsweg 151 durch die Öffnungen 139 zu Verfügung. Bei stärkeren Stößen öffnet auch der Strömungsweg 152.

In den Figuren 2-6 wurde das Dämpfungssystem 100 der Federgabel 304 erläutert. Mit Bezug auf die Figuren 7-12 wird nun das Federsystem 200 bzw. es werden verschiedene Federsysteme 200 für die Federgabel 304 erläutert.

Figur 7 zeigt einen schematischen Querschnitt durch das Rohrsystem 260. Das Rohrsystem 260 umfasst ein Rohr 261 als Standrohr und ein Rohr 262 als Tauchrohr. Die Rohre 261 und 262 teleskopieren miteinander und erstrecken sich von einem ersten und hier oberen Ende 263 zu einem zweiten und hier unteren Ende 264. Am oberen und/oder am unteren Ende können Einstellelemente für die Federeigenschaften vorgesehen sein. Am oberen Ende ist hier ein Luftventil 218 zur Befüllung der Positivluftfeder 201 vorgesehen.

Das Volumen 204 des Standrohrs 261 wird durch den Federungskolben bzw. Kolben 210 in eine Positivluftfeder 201 und eine Negativfeder 202 getrennt. In der dargestellten ausgefahrenen Position 211, die gegebenenfalls mit der Grundposition 111 des Dämpfungssystems 100 aus Figur 3 übereinstimmt, umfasst die Positivluftfeder 201 ein Volumen 201a und die Negativfeder 202 umfasst ein Volumen 202a.

Von dem Kolben 210 erstreckt sich die Kolbenstange 205 aus durch das untere Ende des Standrohrs 261 hindurch nach unten und ist am unteren Ende 264 mit dem Tauchrohr 262 verbunden.

Die Positivluftfeder 201 weist eine Positivkammer 206 auf und belastet das Federsystem 200 in die hier dargestellte ausgefahrene Position 211 vor. Die Negativfeder 202 weist eine Negativkammer 202 auf und wirkt der Kraft der Positivluftfeder 201 entgegen. Dadurch wird die Kennlinie des Federsystems 200 verbessert.

Derartige Federsysteme 200, bei denen eine Positivluftfeder und gegebenenfalls auch eine Luftfeder als Negativfeder 202 eingesetzt werden, ermöglichen Federgabeln mit einem besonders geringen Gewicht. Ein weiterer Vorteil des Einsatzes derartiger Gasfedern ist, dass durch eine Anpassung des Innendrucks eine einfache Anpassung an das Fahrergewicht erzielt werden kann. Während bei dem Einsatz von Stahlfedern die wirksame Stahlfeder bei einem (entsprechend stark) unterschiedlichen Fahrergewicht ausgetauscht werden muss, kann bei dem Einsatz von Gasfedern der Druck einfach angepasst werden.

Nachteilig bei dem Einsatz von Gasfedern ist aber die durch die nötigen Dichtungen bedingte erhöhte Reibung. Bei sehr geringen Stößen können die Reibung zwischen dem Kolben und der Innenwand des Standrohres und die Reibung zwischen der Kolbenstange und dem unteren Abschluss des Standrohrs dazu führen, dass das Ansprechverhalten einer mit Gasfedern betriebenen Federgabel nicht so weich ist, wie es manchmal wünschenswert wäre.

Die Federgabel 304 löst dieses Problem dadurch, dass am unteren Ende der Kolbenstange 205 eine Ergänzungsfeder 208 eingebaut ist. Die Ergänzungsfeder 208 weist ein Federelement 209 auf, welches insbesondere als Schraubenfeder ausgebildet ist. Eine derartige Schraubenfeder weist Prinzip bedingt praktisch keine Reibung auf. Das Ansprechverhalten der Ergänzungsfeder 208 ist viel weicher als das der Positivluftfeder 201.

Die Positivluftfeder 201 und die Ergänzungsfeder 208 sind in Reihe geschaltet, sodass bei einem kleinen Stoß die Feder zuerst wirkt, die eine kleinere Reibung überwinden muss. Das ist hier die Ergänzungsfeder 208 (sofern diese nicht vollständig eingefedert ist).

Die Maximalkraft der Ergänzungsfeder 208 ist erheblich geringer als die Maximalkraft der Positivluftfeder 201. Insbesondere ist ein Verhältnis der Federkraft der Ergänzungsfeder 208 zu einer Federkraft der Positivluftfeder 201 bei maximalen Hub der Ergänzungsfeder 208 kleiner als 20:10 und größer als 1:10.

Auch der Federweg der Ergänzungsfeder 208 ist erheblich geringer als der Federweg der Positivluftfeder 201. Hier ist das Verhältnis des Federweges der Positivluftfeder 201 zu dem Federweg der Ergänzungsfeder im vollständig ausgefederten Zustand größer als 4:1. Im Ausführungsbeispiel weist die Ergänzungsfeder 208 ein Federweg von 6 mm, 8 mm, 10 mm oder 12 mm oder 14 mm auf. Der Federweg des Federsystems 200 insgesamt beträgt vorzugsweise wenigstens 100 mm und kann 120 mm, 140 mm oder 160 mm oder 180 mm oder Werte dazwischen oder mehr betragen. Daraus ergibt sich ein Verhältnis der Federwege der Positivluftfeder und der Ergänzungsfeder 208 von größer als zehn und das Verhältnis kann einen Wert von 15 oder 20 erreichen oder übersteigen. Der Bereich des Verhältnisses der Federwege der Positivluftfeder und der Ergänzungsfeder 208 liegt vorzugsweise zwischen 5 und 30.

In vielen Fällen ist die Ergänzungsfeder 208 in der SAG-Position aber schon vollständig eingefedert. Die SAG-Position kann über den Luftdruck für den Fahrer eingestellt werden und wird meist bei 20% oder 25% oder 30% des Federwegs eingestellt. Das bedeutet, dass eine Federgabel in einer statischen Anfangsposition, in der Fahrer auf dem still stehenden Fahrrad ruhig sitzt, schon bei einem SAG von 25% und bei einem Federweg von 160 mm um etwa 40 mm eingefedert ist. Zur Verdeutlichung des Prinzips zeigt Figur 7 eine Stellung, in der die Ergänzungsfeder 208 noch nicht ganz komprimiert ist. Eine solche Position kann sich auch ergeben, wenn nach einer Einfederung die Positivluftfeder 201 und die Ergänzungsfeder 208 zunächst beide ausfedern.

Ein Verhältnis des Hubes der Positivluftfeder zu einem Federweg der Ergänzungsfeder ist insbesondere größer als ein Verhältnis des Volumens der Positivkammer zu einem Volumen der Negativkammer in der ausgefahrene Position 211. Ein Verhältnis des Volumens der Positivkammer 206 zu einem Volumen der Negativkammer in der ausgefahrenen Position 211 ist insbesondere größer als 1,6. Der Bereich der Ergänzungsfeder 208 aus Figur 7 ist in Figur 8 vergrößert dargestellt. Dabei ist erkennbar, dass die Ergänzungsfeder 208 in einem Führungsgehäuse 221 untergebracht ist. Das Führungsgehäuse 221 besteht aus einem oberen Gehäuseteil 228 und einem unteren Gehäuseteil 223. In dem Führungsgehäuse 221 sind vorzugsweise Löcher 227 vorgesehen, um einen Fluidaustausch mit dem Innenraum des Tauchrohres 262 zu ermöglichen. Das untere Gehäuseteil 223 verfügt über einen Werkzeuganschluss und hier zum Beispiel einen Innensechskant 224. Damit kann das untere Gehäuseteil 223 an dem unteren Ende 262b des Tauchrohres 262 angeschraubt werden. Bei Bedarf kann die Ergänzungsfeder 208 gegen ein stärkeres oder schwächeres Exemplar ausgetauscht werden. Im Inneren des Führungsgehäuses 221 ist das Federelement 209 der Ergänzungsfeder 208 untergebracht. Das Federelement 209 ist als Schraubenfeder ausgebildet und wirkt zwischen der unteren Stützfläche des unteren Gehäusesteils 223 und der oberen Stützeinheit 222, die mit dem unteren Ende der Kolbenstange 205 verbunden und beispielsweise verschraubt ist.

Zwischen dem unteren Ende des oberen Gehäuseteils 221 und dem oberen Ende der oberen Stützeinheit 222 kann eine Endanschlagsdämpfung 220 vorgesehen sein, die beispielsweise als elastischer Ring oder Gummiring oder dergleichen ausgeführt ist. Möglich ist der Einsatz eines O-Rings oder eines Quadrings oder eines anderen geeigneten elastischen Ringes. Durch die Endanschlagsdämpfung 220 wird ein weicher Übergang erreicht, wenn die Ergänzungsfeder 208 das Ende ihres Federwegs erreicht. Vorzugsweise weist die Ergänzungsfeder 208 in der hier dargestellten ausgefahrenen Position 211 eine Federkraft auf, die in einem Bereich zwischen einem Viertel der Federkraft der Positivluftfeder 201 in der ausgefahrenen Position 211 und der vierfachen Federkraft der Positivluftfeder 201 in der ausgefahrenen Position 211 beträgt. In bevorzugten Ausgestaltungen liegt das Verhältnis der Federkraft zwischen 2:1 und 1:2 und kann in konkreten Ausführungen bei etwa 1:1 liegen. Es ist möglich, das die Federkraft der Ergänzungsfeder im weit ausgefederten Zustand so gering wie möglich ist, um ein sehr sanftes Ansprechverhalten zu ermöglichen.

Es ist erfindungsgemäß, dass die Ergänzungsfeder 208 eine besonders geringe Losbrechkraft aufweist. Die Losbrechkraft der Ergänzungsfeder 208 ist insbesondere kleiner als die des restlichen Federsystems und erfindungsgemäß kleiner als die Losbrechkraft der Positivluftfeder 201. Besonders bevorzugt ist die Losbrechkraft der Ergänzungsfeder 208 null.

Dabei ist die Losbrechkraft von der wirkenden Kraft der entsprechenden Feder und des Federsystems im Betrieb zu unterscheiden. Im normalen Betrieb (oder wenn ein Fahrer auf dem Fahrrad sitzt) und sich die Stoßeinrichtung in einer Zwischenposition und z. B. in der SAG-Position befindet, sind die äußeren Kräfte und die Kräfte des Federsystems im statischen Fall im Gleichgewicht. Da die Losbrechkraft der Ergänzungsfeder 208 sehr klein ist, bewirkt jeder kleine oder auch kleinste Stoß eine entsprechende Federbewegung des Federsystems 200, sofern sich die Ergänzungsfeder 208 nicht auf Block befindet.

Ein Stoß mit einer kleineren Kraft als der Losbrechkraft der Positivluftfeder führt dann nur dazu, dass die Ergänzungsfeder einfedert. Das Federsystem reagiert auch auf kleine und kleinste Stöße. Bei Stößen mit einer Kraft auf das Federsystem 200, die größer als die Losbrechkraft der Positivluftfeder ist, bewegt sich auch die Positivluftfeder 201. In allen Fällen wird ein weiches Ansprechverhalten erreicht. Das gilt insbesondere auch dann, wenn nach einem z. B. gewissen Stoß das Federsystem 200 wieder ausfedert. Dann reagiert die Ergänzungsfeder unmittelbar und federt mit aus, sofern deren Maximalkraft nicht überschritten ist.

In einer konkreten Ausgestaltung beträgt die Federkonstante der Ergänzungsfeder 208 etwa 20 N/mm oder 28 /mm und der mögliche Hub beträgt 8 mm oder 10 mm.

Die Ergänzungsfeder 208 ermöglicht ein feineres Ansprechverhalten der Federgabel 304 und trägt zu einer Linearisierung der Kennlinie der Federgabel 304 bei. Auch wenn die Ergänzungsfeder 208 weich einfedert, ist das Dämpfungssystem 100 wirksam, sodass auch bei Federbewegungen nur der Ergänzungsfeder 208 diese Bewegungen durch das Dämpfungssystem 100 gedämpft werden.

Es wird ein Nulldurchgang der Federkennlinie erreicht, da die Ergänzungsfeder keine Losbrechkraft aufweist. Schläge auf das Handgelenk des Fahrers beim Auftreffen auf den Boden, die durch die Losbrechkraft verursacht werden, treten nicht mehr auf.

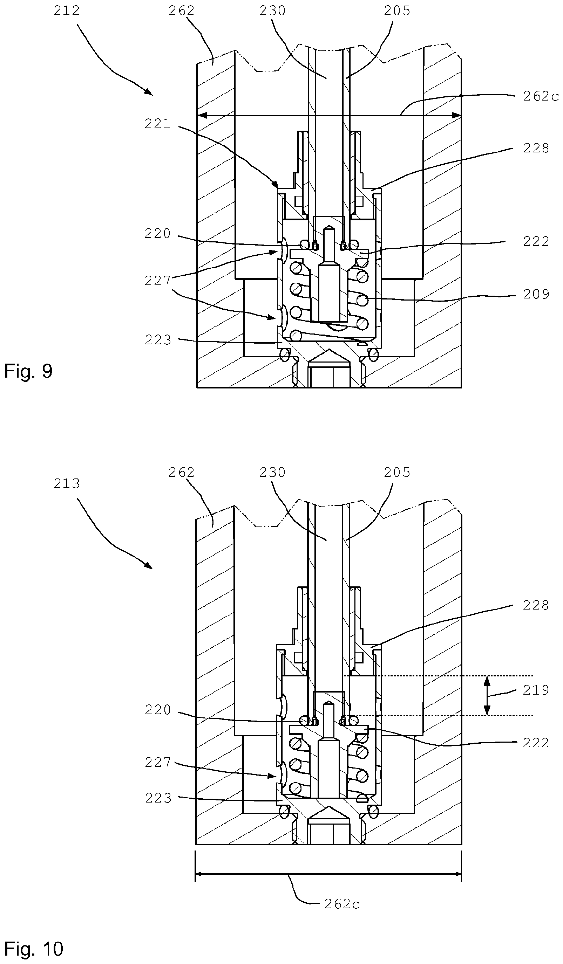

Figur 9 und 10 zeigen den Bereich der Ergänzungsfeder 208, wobei sich in Figur 9 die Ergänzungsfeder in einer Übergangsposition 212 und in Figur 10 in der Endposition 213 befindet. Der Hub 219 der Ergänzungsfeder 208 ist in Figur 10 vollständig ausgeschöpft. Der Hub 219 der Ergänzungsfeder 208 ist insbesondere kleiner als der Durchmesser 261c und 262c der Rohre 261 und 262. Der Innendurchmesser 261c des Rohres 261 beträgt hier vorzugsweise zwischen 15 und 50 mm und kann z.B. 24,6 mm betragen. Der Außendurchmesser 262c des Rohres 262 beträgt hier vorzugsweise zwischen 20 und 60 mm und kann z.B. 31,4 mm betragen. Der Hub des Federsystems insgesamt beträgt aber ein Mehrfaches (>3 oder >4 oder >5 oder >10 und hier >15) des Hubes 219. Vorzugsweise entspricht der Hub 219 wenigstens im Wesentlichen dem Kolbenhub 119 und beträgt z. B. etwa 160 mm. Wegen z. B. fertigungstechnischer Bedingungen können der Hub 219 und der Kolbenhub 119 etwas unterschiedlich sein, sind aber vorzugsweise (wenigstens fast) identisch.

Über die Ergänzungsfeder 208 kann zum Beginn des Einfederns oder dann, wenn die Ergänzungsfeder 208 nicht auf Block ist, ein besseres Ansprechverhalten erzielt werden. Dabei können die Federkraft und der Hub 219 der Ergänzungsfeder 208 so bemessen sein, dass auch in der SAG-Position noch erheblicher Hub für die Ergänzungsfeder 208 zur Verfügung steht, sodass sich die Ergänzungsfeder 208 in der SAG-Position beispielsweise in der in Figur 9 dargestellten Stellung befindet.

Es ist aber ebenso bevorzugt, dass die Ergänzungsfeder 208 im statischen Ruhezustand in der SAG-Position schon vollständig eingefedert ist. Im realen Fahrbetrieb federt die Stoßeinrichtung nach einem Stoß wieder aus. Dabei federt z. B. bei einem Sprung oder einem kurzzeitigen Verlust des Bodenkontaktes auch die Ergänzungsfeder 208 aus, sodass die Ergänzungsfeder 208 einfedern kann, wenn sie (kurz) zuvor ausgefedert hat.

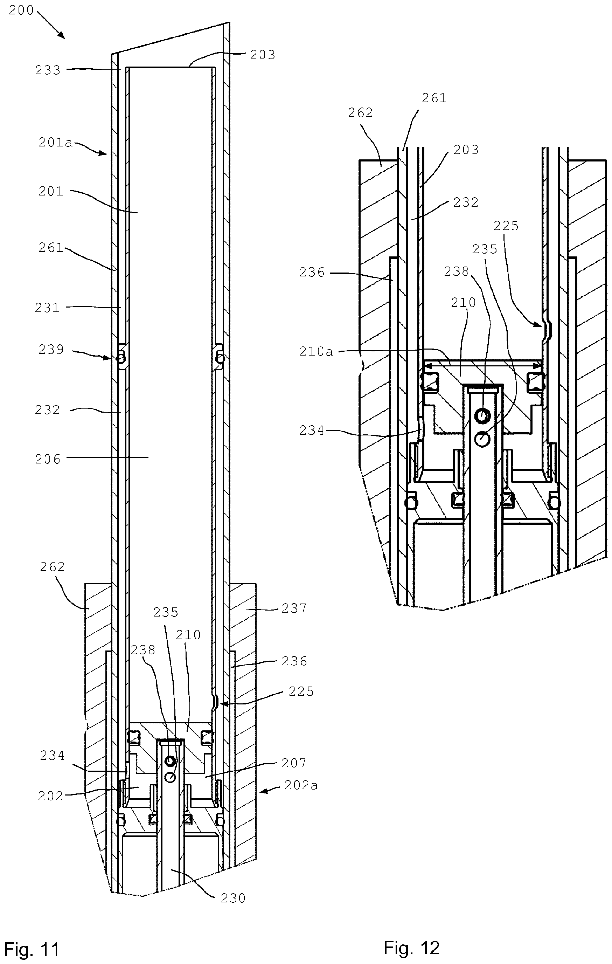

Figur 11 zeigt eine andere Ausführungsform eines Federsystems 200. Das Federsystem 200 ist hier wiederum in dem Standrohr 261 des Rohrsystems 260 angeordnet. Das Federsystem 200 gemäß Figur 11 kann ebenso wie das Federsystem 200 gemäß Figur 7 über eine mechanische Ergänzungsfeder 208 am unteren Ende der Kolbenstange 205 verfügen. Der entsprechend untere Bereich der Kolbenstange ist vorzugsweise analog zu den Figuren 7 bis 10 ausgestaltet.

Das Federsystem 200 umfasst hier eine Positivluftfeder 201 mit einer Positivkammer 206 oberhalb des Kolbens 210. Zwischen dem unteren Ende des Kolbens 210 und dem unteren Abschluss des Standrohrs 261 ist die Negativfeder 202 mit einer Negativkammer 207 angeordnet.

Der Kolben 210 läuft innerhalb einer Zylindereinrichtung 203, die in das Innere des Standrohrs 261 eingesetzt ist. Die Zylindereinrichtung 203 ist hier nach oben hin offen ausgebildet, sodass der die Zylindereinrichtung 203 umgebende Hohlraum 231 zwischen der Zylindereinrichtung und der Innenwandung des Standrohres 261 einen zusätzlichen Hohlraum 231 zur Verfügung stellt, der zum Volumen der Positivluftfeder 201 beiträgt. An einer Axialposition ist eine Dichtung 239 in dem Hohlraum zwischen der Zylindereinrichtung 203 und dem Standrohr 261 vorgesehen. Die Dichtung 239 trennt den oberen Bereich mit dem zusätzlichen Hohlraum 231 von einem unteren Bereich mit einem weiteren Hohlraum 232. Während der zusätzliche Hohlraum 231 mit der Positivkammer 206 verbunden ist, ist der weitere Hohlraum 232 mit der Negativkammer 207 über Strömungsöffnungen 234 verbunden. Der zusätzliche Hohlraum 231 ist über den Ringspalt als Strömungsöffnung 233 mit der Positivkammer 206 verbunden.

Durch den zusätzlichen Hohlraum 231 und den weiteren Hohlraum 232 wird das der Positivluftfeder 201 zu Verfügung stehende Volumen 201a und dass der Negativfeder 202 zur Verfügung stehende Volumen 202a jeweils um den zusätzlichen Hohlraum 231 bzw. den weiteren Hohlraum 232 vergrößert. Umgekehrt ausgedrückt wird die Fläche verkleinert, auf die der Kolben 210 beim Einfedern und Ausfedern einwirkt.

Das vergrößerte Volumen 201a der Positivluftfeder 201 und das vergrößerte Volumen 202a der Negativfeder 202 führen dazu, dass beim Einfedern und Ausfedern eine geringere Progression erreicht wird. Dadurch wird die Kennlinie der Federgabel linearisiert. Gegenüber einem konventionellen Federsystem mit gleichen Außenabmessungen wird das Verhältnis aus dem Volumen 201a zu dem Kolbendurchmesser 210a vergrößert. Beides bedeutet, dass sowohl die Progression der Positivluftfeder als auch die Progression der Negativluftfeder verringert werden, sodass eine insgesamt linearere Kennlinie zur Verfügung gestellt werden kann.

Des Weiteren ist es möglich, dass über eine Strömungsöffnung 235 beispielsweise die Negativkammer 207 mit dem Innenraum der Kolbenstange 205 verbunden wird. Der Innenraum der Kolbenstange 205 dient dann als (weiterer) Ergänzungshohlraum 230 für die Negativfeder.

Je nach Konstruktion ist es auch möglich, den Innenraum 230 der Kolbenstange 205 mit der Positivkammer 206 zu verbinden und von der Negativkammer 207 zu trennen. Dazu kann beispielsweise eine Längsbohrung durch den Kolben 210 eingebracht werden, die die Positivkammer 206 mit dem Ergänzungshohlraum 230 verbindet. Dementsprechend wird dann die Strömungsöffnung 235 verschlossen.

Das Bezugszeichen 238 bezeichnet ein Verbindungselement zur Verbindung des Kolbens 210 mit der Kolbenstange 205.

Der Bypass 225, der in der Darstellung gemäß Figur 11 ein wenig oberhalb von dem Kolben 210 dargestellt ist, verbindet die Positivkammer 206 mit der Negativkammer 207, wenn sich der Kolben 210 bzw. die Dichtung des Kolbens 210 in der Höhe des Bypasses 225 befindet. Dadurch kann ein Druckaustausch zwischen der Positivkammer 206 und der Negativkammer 207 in dieser Position erfolgen. Darüber findet ein automatischer Druckausgleich zwischen der Positivkammer 206 und der Negativkammer 207 statt, jedes Mal, wenn sich der Kolben 210 in einer entsprechenden Position befindet.

Das Tauchrohr 262 wird über Führungsbuchsen 237 an dem Standrohr 261 geführt. Der Leerraum 236 unterhalb der Führungsbuchse 237 dient zur Verminderung der Reibung.

Figur 12 zeigt einen vergrößerten Ausschnitt aus Figur 11, in dem die Öffnung 234 und der Bypass 225 besser erkennbar sind.

Insgesamt stellt die Federgabel ein vorteilhaftes System zur Verfügung, bei dem in einem ersten Federwegbereich eine weichere Dämpfung und eine weichere Federung ermöglicht wird. Die Dämpfung wird dabei wegabhängig verändert. Während nur über einen ersten Weganteil die Dämpfung stark verringert wird, wird die Dämpfung nach beispielsweise einem Drittel oder 40% des Federweges auf ein Normalmaß zurückgeführt.

Bei der Federung wird durch die Ergänzungsfeder 208 ebenfalls ein weicheres Ansprechverhalten ermöglicht. Dadurch können kleine Stöße und Bodenunebenheiten besser gedämpft werden. Durch eine Vergrößerung des Verhältnisses von Federvolumen zu Kolbenfläche kann eine noch weiter verbesserte Linearisierung der Federkennlinie erreicht werden.

Das Federsystem 200 ermöglicht es, die typische Wellenform einer Luftfeder-Kennlinie, zu linearisieren.

Generell ist es für diese Anmeldung wichtig zu beachten, dass beim Fahren das Vorderrad eines Fahrrads sehr häufig den Bodenkontakt verlässt. Die Federgabel federt dabei jedes Mal (komplett) aus und somit kommt die Ergänzungsfeder dann auch in Einsatz, selbst wenn die Ergänzungsfeder 208 in der statischen SAG-Position schon auf Block ist!

Bei einem Luftfedersystem gibt es Dichtungen am Kolben und an der Kolbenstange, die Reibung erzeugen. Die Losbrechkraft oder Haftreibung (die nötige Kraft, um eine Bewegung zu erzeugen) ist besonders unerwünscht, wenn man ein sanftes Ansprechen einer z. B. als Federgabel ausgebildeten Stoßeinrichtung erzielen will.

Die Ergänzungsfeder 208 in der Kolbenstange ermöglicht eine Bewegung der Federgabel, schon bevor die Losbrechkraft (Reibungskraft) erreicht oder überschritten wird. In einem konkreten Beispiel durchgeführte Messungen ergaben eine Losbrechkraft von 20N.

Streng genommen hat ein Luftfedersystem an sich keine Federkennlinie (Kraftverlauf dargestellt über den Federweg), die durch den Nullpunkt des Koordinatensystems verläuft, wo der Federweg und die Kraft jeweils null betragen. Das liegt an der Losbrechkraft, die überwunden werden muss, damit eine Stoßeinrichtung einfedert. Eine mit einer Ergänzungsfeder 208 ausgerüstete Stoßeinrichtung 1 ermöglicht hingegen eine sofortige Bewegung der Stoßeinrichtung 1 (z. B. einer Federgabel), auch wenn sich die Positivluftfeder an sich bei einer Kraft größer oder gleich 28 N (oder je nach Ausgestaltung z. B. 20 N) anfängt zu bewegen. Die Ergänzungsfeder 208 macht es möglich, dass jedes Mal, wenn das Rad am Boden ankommt, direkt gefedert wird. Ohne eine solche Ergänzungsfeder 208 könnte ein Schlag von 20N ungefedert in die Hände des Fahrers weitergeleitet werden. Die Federkennlinie verläuft durch den Nullpunkt.

Ein Federsystem 200 weist eine linearere Kennlinie auf und hat erhebliche Vorteile. Das Federsystem 200 bietet ein sanftes Ansprechverhalten, weil im ersten Bereich (bzw. bis sich die Kurven der Positivluftfeder und der Ergänzungsfeder treffen) des Federwegs weniger Kraft benötigt wird, um einen gleiches Hindernis zu überfahren bzw. den gleichen Federweg abzufahren.

Im mittleren Bereich des Federwegs wird eine verbesserte Stützwirkung erzielt, weil der Federweg insgesamt linearer verläuft.

Grundsätzlich ist eine Stahlfeder linearer als ein konventionelles Luftfedersystem mit einer Positivluftfeder und einer Negativluftfeder. Bei einem konventionellen Luftfedersystem hat bei gleichem Kraftanstieg das konventionelle Luftfedersystem deutlich mehr Weg zurücklegt, als eine lineare Stahlfeder. Das kann bei konventionellen Luftfedersystemen zu einem Abtauchen der Federgabel in Situationen führen, wo die Federgabel schon leicht eingefedert ist, wie zum Beispiel beim Bremsen bei einer Abfahrt mit Hindernissen auf dem Weg. Dadurch bleibt dann nur noch relativ wenig Federweg übrig, was dem Fahrer ein unsicheres Gefühl geben kann, weil die Last noch weiter nach vorne verlagert wird und nur noch wenig Reservefederweg übrig bleibt für ein unerwartetes Ereignis. Die hier vorgestellte Stoßeinrichtung 1 bietet demgegenüber ein besser berechenbares Verhalten und somit ein sichereres Gefühl für den Fahrer.

Bei der Stoßeinrichtung 1 wird vorzugsweise zur besseren Linearisierung der Kennlinie des Federsystems 200 das Volumen von beiden Luftkammern (Positivluftkammer und Negativkammer) gegenüber dem Stand der Technik vergrößert bzw. relativ zu dem Volumen der Luftkammern der Durchmesser des Kolbens verringert. Dadurch wird eine geringere Progression an beiden Enden des Federwegs erreicht und eine typische "Welle" oder umgekehrte "S-Form" der Luftfederung wird kleiner.

Vorteilhaft ist, dass die Ergänzungsfeder 208 in Serie mit der Luftfederung (Positivluftfeder und Negativfeder) geschaltet ist, die in einem ersten Bereich des Federwegs wirkt. Im Ausführungsbeispiel wirkt die Ergänzungsfeder 208 bis die Kraft der Ergänzungsfeder 208 auf die Federgabel 224 Newton (N) erreicht.

Beim Vergleich von zwei gleich eingestellten Federgabeln (einmal konventionell ohne Ergänzungsfeder und einmal eine Stoßeinrichtung 1 mit Ergänzungsfeder 208) mit jeweils z. B. gleichen SAG von 25% ist klar erkennbar, dass vor der SAG-Position ein sanfteres Ansprechverhalten vorliegt, weil der Verlauf der Kraft über dem Federweg unterhalb dem Verlauf der konventionellen Federgabel verläuft. Oberhalb der SAG-Position (bei größerem Federweg) ist der Verlauf deutlich linearer und somit für den Fahrer besser abschätzbar oder berechenbar. Durch die Ergänzungsfeder wird das Federsystem feinfühliger und kann auch bei sehr geringen Kräften wirken, während bei einem konventionellen Luftfedersystem erst eine nicht zu vernachlässigende Losbrechkraft überwunden werden muss. Die Traktion wird verbessert.

**Bezugszeichenliste:**

| | | | |
|---|---|---|---|
| 1 | Stoßeinrichtung, Stoßdämpfer | 132 | Drosseleinheit |
| | | 133 | Vorspanneinrichtung |
| 60 | Rohrsystem | 134 | Ausgleichsvolumen |
| 65 | Radaufnahmeraum | 135 | Stahlfeder |
| 100 | Dämpfungssystem | 136 | Gasfeder |
| 103 | Dämpferzylinder | 137 | Ventil |
| 104 | Dämpfungsvolumen | 138 | Öffnung von 137 |
| 105 | Kolbenstange | 139 | Öffnung |
| 106 | erste Dämpfungskammer | 140 | Drosseleinrichtung Low-Speed |
| 107 | zweite Dämpfungskammer | | |
| 108 | Zusatzkammer | 141 | erster Kanal |
| 108a | Teilkammer von 108 | 142 | zweiter Kanal |
| 109 | Dämpfungsfluid | 143 | Rückkanal |
| 110 | Kolben | 145 | Drosseleinrichtung High-Speed |
| 111 | Grund-, Anfangsposition | | |
| 112 | Übergangsposition | 146 | Steuereinsatz |
| 113 | eingetauchte Position | 150 | Strömungsweg |
| 114 | erster Wegabschnitt | 151 | Strömungsweg |
| 115 | Übergangsabschnitt | 152 | Strömungsweg |
| 116 | zweiter Wegabschnitt | 153 | Strömungsweg |
| 118 | Einsatz | 154 | Radialspalt |
| 118a | unteres Ende | 160 | Rohrsystem |
| 118b | oberes Ende | 161 | Standrohr |
| 119 | Kolbenhub | 162 | Tauchrohr |
| 120 | Trennkolben | 166 | unterer Anschluss |
| 120a | Buchse | 167 | Hohlraum an 161 |
| 120b | unteres Ende von 120a | 168 | Bedienelement |
| 120c | unteres Ende von 120 | 169 | Hohlraum an 161 |
| 121 | Grundposition, Anfangsposition | 170 | Öffnung |
| | | 171 | Shim |
| 122 | Übergangsposition | 173 | Shim |
| 123 | eingetauchte Position | 174 | Dichtung |
| 124 | erster Wegabschnitt | 175 | Dichtung |
| 125 | Übergangsabschnitt | 200 | Federsystem |
| 126 | weiter eingetauchter Wegabschnitt | 201 | Positivluftfeder |
| | | 201a | Volumen von 201 |
| 129 | Kolbenhub | 202 | Negativfeder |
| 202a | Volumen von 202 | 238 | Verbindungselement 205+210 |
| 203 | Zylindereinrichtung | | |
| 204 | Volumen (in 261) | 239 | Dichtung zw. 231+232 |
| 205 | Kolbenstange | 251 | Luftvolumen |
| 206 | Positivkammer | 252 | Luftvolumen |
| 207 | Negativkammer | 260 | Rohrsystem |
| 208 | Ergänzungsfeder | 261 | Rohr, Standrohr |
| 209 | Federelement, Schraubenfeder | 261a | 1. Ende von 261 |
| | | 261b | 2. Ende von 261 |
| 210 | Kolben | 261c | Durchmesser |
| 210a | Durchmesser von 210 | 262 | Rohr, Tauchrohr |
| 211 | ausgefahrene Position | 262a | 1. Ende von 262 |
| | Grundposition | 262b | 2. Ende von 262 |
| 212 | Übergangsposition | 262c | Durchmesser |
| 213 | eingetauchte Position, Endposition | 263 | 1. Ende |
| | | 264 | 2. Ende |
| 218 | Luftventil für 201 | 300 | Zweirad, Fahrrad |
| 219 | Hub von 208 | 301 | Rad, Vorderrad |
| 220 | Endanschlagsdämpfung | 302 | Rad, Hinterrad |
| 221 | Führungsgehäuse | 303 | Rahmen |
| 222 | (obere) Stützeinheit | 304 | Federgabel |
| 223 | (unteres) Gehäuseteil von 221 | 305 | Dämpfer |
| | | 306 | Lenker |
| 224 | Innensechskant | 307 | Sattel |
| 225 | Bypass | 308 | Nabe |
| 227 | Loch in 221 | 309 | Speiche |
| 228 | (oberes) Gehäuseteil von 221 | 310 | Felge |
| | | 311 | Scheibenbremse |
| 230 | Ergänzungshohlraum | 312 | Antrieb |
| | (Innenraum von 205) | 314 | Gabelkrone |
| 231 | zusätzlicher Hohlraum für 201 | 315 | Gabelschaft |
| | | 316 | Ausfallende |
| 232 | weiterer Hohlraum für 202 | 317 | untere Einheit (Lower) |
| | | 318 | obere Einheit |
| 233 | Strömungsöffnung zu 231 | | |
| 234 | Strömungsöffnung zu 232 | | |
| 235 | Strömungsöffnung zu 230 | | |
| 236 | Leerraum | | |
| 237 | Führungsbuchse | | |

## Patentansprüche

1. Stoßeinrichtung (1) für ein wenigstens teilweise muskelbetriebenes Zweirad (300), umfassend wenigstens ein Rohrsystem (260) mit zwei teleskopierbaren Rohren (261, 262), wobei sich das Rohrsystem (260) von einem ersten Ende (263) zu einem zweiten Ende (264) erstreckt,
wobei ein Federsystem (200) vorgesehen ist, welches zwischen den beiden Enden (263, 264) wirksam ist und die beiden Rohre (261, 262) in eine ausgefahrene Position (211) vorbelastet, wobei das Federsystem (200) eine Positivluftfeder (201) und eine davon unabhängige und in Reihe geschaltete Ergänzungsfeder (208) umfasst, und wobei die Positivluftfeder (201) und auch die Ergänzungsfeder (208) das Rohrsystem (260) in die ausgefahrene Position (211) vorbelasten,
wobei die Ergänzungsfeder (208) eine geringere Losbrechkraft aufweist als die Positivluftfeder (201) und dass ein Verhältnis des Federweges der Positivluftfeder (201) zu dem Federweg der Ergänzungsfeder (208) größer als 4:1 beträgt, **dadurch gekennzeichnet,**
**dass** die Ergänzungsfeder (208) zwischen der Kolbenstange (205) und dem zweiten Rohr (262) angeordnet ist.

2. Stoßeinrichtung (1) nach einem der vorhergehenden Ansprüche, ausgebildet als Federgabel (304), wobei eines der beiden Rohre (261) als Standrohr und das andere Rohr (262) als Tauchrohr ausgebildet ist und wobei insbesondere das Standrohr (261) mit der Gabelkrone (314) oder dem Gabelschaft (315) und das Tauchrohr (262) mit einem Ausfallende (316) verbunden ist.

3. Stoßeinrichtung (1) nach einem der vorhergehenden Ansprüche, wobei die Positivluftfeder (201) eine Positivkammer (206) in einem ersten der beiden Rohre (261, 262) umfasst.

4. Stoßeinrichtung (1) nach einem der vorhergehenden Ansprüche, wobei die Positivkammer (206) von einem mit einer Kolbenstange (205) verbundenen beweglichen Kolben (210) begrenzt wird und wobei die Kolbenstange (205) mit dem zweiten Rohr (262) gekoppelt ist.

5. Stoßeinrichtung (1) nach einem der vorhergehenden Ansprüche, wobei die Ergänzungsfeder (208) eine lineare Federkennlinie aufweist und/oder wobei die Ergänzungsfeder (208) wenigstens ein metallisches Federelement (209) wie z. B. eine Schraubenfeder umfasst.

6. Stoßeinrichtung (1) nach einem der vorhergehenden Ansprüche, wobei ein Hub (219) der Ergänzungsfeder (208) kleiner ist als ein Durchmesser (261b, 262b) wenigstens eines der Rohre (261, 262) des Rohrsystems (260).

7. Stoßeinrichtung (1) nach einem der vorhergehenden Ansprüche, wobei die Ergänzungsfeder (208) eine Endanschlagsdämpfung (220) umfasst.

8. Stoßeinrichtung (1) nach einem der vorhergehenden Ansprüche, wobei ein Verhältnis der Federkraft der Ergänzungsfeder (208) zu einer Federkraft der Positivluftfeder (201) bei maximalen Hub der Ergänzungsfeder (208) kleiner 20:10 und größer als 1:10 beträgt.

9. Stoßeinrichtung (1) nach einem der vorhergehenden Ansprüche, wobei ein Verhältnis der Federkraft der Ergänzungsfeder (208) zu einer Federkraft der Positivluftfeder (201) in einer ausgefahrenen Position (211) und/oder einer SAG-Position kleiner 4:1 und größer als 1:4 beträgt
und/oder wobei ein Verhältnis des Hubes der Positivluftfeder zu einem Federweg der Ergänzungsfeder (208) größer ist als ein Verhältnis des Volumens der Positivkammer (206) zu einem Volumen der Negativkammer in der ausgefahrene Position (211) und/oder wobei ein Verhältnis des Volumens der Positivkammer (206) zu einem Volumen der Negativkammer in der ausgefahrene Position (211) größer als 1,5 beträgt.

10. Stoßeinrichtung (1) nach einem der vorhergehenden Ansprüche, wobei die Ergänzungsfeder (208) austauschbar und/oder einstellbar ist und/oder wobei die Ergänzungsfeder (208) in einem Führungsgehäuse (221) untergebracht ist, welches austauschbar und/oder einstellbar ist.

11. Stoßeinrichtung (1) nach einem der vorhergehenden Ansprüche, wobei in dem ersten Rohr (261) eine Negativfeder (202) ausgebildet ist, welche eine der Positivluftfeder (201) entgegen gerichtete Kraft ausübt und/oder wobei die Negativfeder (202) als Luftfeder ausgebildet ist und wobei der bewegliche Kolben (210) ein Volumen (204) in dem ersten Rohr (261) in ein Negativvolumen (202a) der Negativfeder (202) und ein Positivvolumen (201a) der Positivfeder (201) variabel teilt.

12. Stoßeinrichtung (1) nach einem der vorhergehenden Ansprüche, wobei ein Bypass (225) vorgesehen ist, der an einer vorbestimmten Kolbenstellung einen Druckausgleich zwischen der Positivluftfeder (201) und der Negativfeder (202) gewährleistet.

13. Stoßeinrichtung (1) nach einem der vorhergehenden Ansprüche, wobei ein Dämpfungssystem (100) umfasst ist und wobei insbesondere wenigstens ein Teil des Dämpfungssystems (100) in einem zweiten Rohrsystem (160) angeordnet ist.

14. Stoßeinrichtung (1) nach einem der vorhergehenden Ansprüche, wobei in dem ersten Rohr (261) des Federsystems (200) eine Zylindereinrichtung (203) aufgenommen ist, in welcher der Kolben (210) beweglich aufgenommen ist und/oder wobei die Zylindereinrichtung (203) wenigstens abschnittsweise von einem zusätzlichen Hohlraum (231) umgeben ist, der wie das Volumen der Positivkammer (206) der Zylindereinrichtung (203) zu dem Volumen (201a) der Positivluftkammer (201) beiträgt und/oder wobei die Zylindereinrichtung (203) wenigstens abschnittsweise von einem weiteren Hohlraum (232) umgeben ist, der wie das Volumen der Negativkammer (207) der Zylindereinrichtung (203) zu dem Volumen (202a) der Negativluftkammer (202) beiträgt und/oder wobei die Zylindereinrichtung (203) fest mit dem ersten Rohr (261) verbunden ist und Strömungsöffnungen (233, 234) zu dem zusätzlichen Hohlraum (231) und zu dem weiteren Hohlraum (232) aufweist und/oder wobei der zusätzliche Hohlraum (231) und der weitere Hohlraum (232) axial benachbart sind und durch eine Dichtung (239) voneinander getrennt sind.

## Claims

1. Shock device (1) for an at least partially muscle-powered two-wheeled vehicle (300), comprising at least one tube system (260) having two telescopic tubes (261, 262), the tube system (260) extending from a first end (263) to a second end (264), wherein a suspension system (200) is provided which is effective between the two ends (263, 264) and biases the two tubes (261, 262) to an extended position (211), wherein the suspension system (200) comprises a positive air spring (201) and an independent, series-connected supplementary spring (208), and wherein both the positive air spring (201) and the supplementary spring (208) bias the tube system (260) to the extended position (211),
wherein the supplementary spring (208) shows a lower breakaway force than does the positive air spring (201), and the ratio of the suspension travel of the positive air spring (201) to the suspension travel of the supplementary spring (208) is higher than 4:1,
**characterized in**
**that** the supplementary spring (208) is disposed between the piston rod (205) and the second tube (262).

2. The shock device (1) according to any of the preceding claims, configured as a suspension fork (304), wherein one of the two tubes (261) is configured as a stanchion tube and the other of the tubes (262), as a slider tube, and wherein in particular the stanchion tube (261) is connected with the fork crown (314) or the fork column (315) and the slider tube (262), with a dropout (316) .

3. The shock device (1) according to any of the preceding claims, wherein the positive air spring (201) comprises a positive chamber (206) in a first of the two tubes (261, 262).

4. The shock device (1) according to any of the preceding claims, wherein the positive chamber (206) is enclosed by a moving piston (210) connected with a piston rod (205), and wherein the piston rod (205) is coupled with the second tube (262).

5. The shock device (1) according to any of the preceding claims, wherein the supplementary spring (208) shows linear spring characteristics, and/or wherein the supplementary spring (208) comprises at least one metallic spring member (209) such as a coil spring.

6. The shock device (1) according to any of the preceding claims, wherein the stroke length (219) of the supplementary spring (208) is shorter than the diameter (261b, 262b) of at least one of the tubes (261, 262) of the tube system (260).

7. The shock device (1) according to any of the preceding claims, wherein the supplementary spring (208) comprises a top-out damping (220).

8. The shock device (1) according to any of the preceding claims, wherein the ratio of the spring force of the supplementary spring (208) to the spring force of the positive air spring (201) in the case of the maximum stroke length of the supplementary spring (208) is lower than 20:10 and higher than 1:10.

9. The shock device (1) according to any of the preceding claims, wherein the ratio of the spring force of the supplementary spring (208) to the spring force of the positive air spring (201) in an extended position (211) and/or a sag position is lower than 4:1 and higher than 1:4,
and/or wherein the ratio of the stroke length of the positive air spring to the suspension travel of the supplementary spring (208) is higher than the ratio of the volume of the positive chamber (206) to the volume of the negative chamber in the extended position (211), and/or wherein the ratio of the volume of the positive chamber (206) to the volume of the negative chamber in the extended position (211) is higher than 1.5.

10. The shock device (1) according to any of the preceding claims, wherein the supplementary spring (208) is exchangeable and/or adjustable, and/or wherein the supplementary spring (208) is accommodated in a guide housing (221) which is exchangeable and/or adjustable.

11. The shock device (1) according to any of the preceding claims, wherein a negative spring (202) is configured in the first tube (261) exerting a force counteracting the positive air spring (201), and/or wherein the negative spring (202) is configured as an air spring, and wherein the moving piston (210) variably divides the volume (204) in the first tube (261) into a negative volume (202a) of the negative spring (202) and a positive volume (201a) of the positive spring (201).

12. The shock device (1) according to any of the preceding claims, wherein a bypass (225) is provided which ensures pressure compensation between the positive air spring (201) and the negative spring (202) in a predetermined piston position.

13. The shock device (1) according to any of the preceding claims comprising a damping system (100), and wherein in particular at least part of the damping system (100) is disposed in a second tube system (160).

14. The shock device (1) according to any of the preceding claims, wherein the first tube (261) of the suspension system (200) receives a cylinder device (203) in which the piston (210) is movably accommodated, and/or wherein the cylinder device (203) is at least in sections surrounded by an additional hollow space (231), which contributes to the volume (201a) of the positive air chamber (201) as does the volume of the positive chamber (206) of the cylinder device (203),
and/or wherein the cylinder device (203) is at least in sections surrounded by a further hollow space (232), which contributes to the volume (202a) of the negative air chamber (202) as does the volume of the negative chamber (207) of the cylinder device (203),
and/or wherein the cylinder device (203) is firmly connected with the first tube (261) and comprises flow apertures (233, 234) toward the additional hollow space (231) and toward the further hollow space (232), and/or wherein the additional hollow space (231) and the further hollow space (232) are axially adjacent and are separated from one another by a seal (239).

## Revendications

1. Dispositif d'absorption de chocs (1) pour un deux roues (300) entraîné au moins partiellement par force musculaire, comprenant au moins un système de tubes (260) doté de deux tubes télescopiques (261, 262), ledit système de tubes (260) s'étendant d'une première extrémité (263) à une seconde extrémité (264), un système de suspension (200) étant prévu, lequel exerce son action entre lesdites deux extrémités (263, 264) et applique une précontrainte sur lesdits deux tubes (261, 262) en les mettant dans une position déployée (211), ledit système de suspension (200) comprenant un ressort pneumatique positif (201) et un ressort complémentaire (208) indépendant de ceci et monté en série, et ledit ressort pneumatique positif (201) ainsi que le ressort complémentaire (208) exerçant une précontrainte sur ledit système de tubes (260) en le mettant dans ladite position déployée (211), ledit ressort complémentaire (208) présentant une force de décollage inférieure à celle du ressort pneumatique positif (201) et qu'un rapport entre le débattement du ressort pneumatique positif (201) et le débattement du ressort complémentaire (208) est supérieur à 4:1,
**caractérisé en ce**
**que** le ressort complémentaire (208) est agencé entre la tige de piston (205) et le deuxième tube (262).

2. Dispositif d'absorption de chocs (1) selon l'une quelconque des revendications précédentes, réalisé en tant que fourche de suspension (304), l'un des deux tubes (261) étant réalisé en tant que tube montant et l'autre tube (262) en tant que tube plongeur, et notamment le tube montant (261) étant relié au té de direction (314) ou au pivot (315) et le tube plongeur (262) à une patte de fourche (316).

3. Dispositif d'absorption de chocs (1) selon l'une quelconque des revendications précédentes, le ressort pneumatique positif (201) comprenant une chambre positive (206) dans un premier tube desdits deux tubes (261, 262).

4. Dispositif d'absorption de chocs (1) selon l'une quelconque des revendications précédentes, ladite chambre positive (206) étant délimitée par un piston (210) mobile relié à une tige de piston (205) et ladite tige de piston (205) étant solidarisée au deuxième tube (262).

5. Dispositif d'absorption de chocs (1) selon l'une quelconque des revendications précédentes, le ressort complémentaire (208) présentant une courbe caractéristique linéaire et/ou ledit ressort complémentaire (208) comprenant au moins un élément de ressort (209) métallique tel qu'un ressort hélicoïdal.

6. Dispositif d'absorption de chocs (1) selon l'une quelconque des revendications précédentes, une course (219) du ressort complémentaire (208) étant plus petite qu'un diamètre (261b, 262b) d'au moins un des tubes (261, 262) du système de tubes (260).

7. Dispositif d'absorption de chocs (1) selon au moins l'une quelconque des revendications précédentes, ledit ressort complémentaire (208) comprenant un amortissement de fin de butée (220).

8. Dispositif d'absorption de chocs (1) selon l'une quelconque des revendications précédentes, un rapport entre la force élastique du ressort complémentaire (208) et une force élastique du ressort pneumatique positif (201) étant, à course maximale du ressort complémentaire (208), inférieur à 20:10 et supérieur à 1:10.

9. Dispositif d'absorption de chocs (1) selon l'une quelconque des revendications précédentes, un rapport entre la force élastique du ressort complémentaire (208) et une force élastique du ressort pneumatique positif (201) dans une position déployée (211) et/ou une position SAG étant inférieur à 4:1 et supérieur à 1:4,
et un rapport entre la course du ressort pneumatique positif et un débattement du ressort complémentaire (208) étant supérieur à un rapport entre le volume de la chambre positive (206) et un volume de la chambre négative en position déployée (211),
et/ou un rapport entre le volume de la chambre positive (206) et un volume de la chambre négative en position déployée (211) étant supérieur à 1,5.

10. Dispositif d'absorption de chocs (1) selon l'une quelconque des revendications précédentes, le ressort complémentaire (208) étant interchangeable et/ou réglable, et/ou le ressort complémentaire (208) étant logé dans un boîtier de direction (221) qui est interchangeable et/ou réglable.

11. Dispositif d'absorption de chocs (1) selon l'une quelconque des revendications précédentes, un ressort négatif (202) étant réalisé dans le premier tube (261), lequel ressort exerçant une contrainte dirigée dans le sens opposé au ressort pneumatique positif (201), et/ou le ressort négatif (202) étant réalisé en tant que ressort pneumatique et le piston mobile (210) divisant de manière variable un volume (204) dans le premier tube (261) en un volume négatif (202a) du ressort négatif (202) et en un volume positif (201a) du ressort positif (201).

12. Dispositif d'absorption de chocs (1) selon l'une quelconque des revendications précédentes, un by-pass (225) étant prévu, lequel, à une position prédéterminée du piston, garantit une compensation de pression entre le ressort pneumatique positif (201) et le ressort négatif (202).

13. Dispositif d'absorption de chocs (1) selon l'une quelconque des revendications précédentes, un système d'amortissement (100) étant inclus, et notamment au moins une partie dudit système d'amortissement (100) étant agencée dans un deuxième système de tubes (160).

14. Dispositif d'absorption de chocs (1) selon l'une quelconque des revendications précédentes, un dispositif de cylindres (203) étant disposé dans le premier tube (261) du système de suspension (200), le piston (210) étant disposé mobile dans ledit dispositif de cylindres et/ou ledit dispositif de cylindres (203) étant au moins partiellement entouré d'une cavité supplémentaire (231) qui, comme le volume de la chambre positive (206) du dispositif de cylindres (203), participe au volume (201a) de la chambre à air positive (201), et/ou ledit dispositif de cylindres (203) étant entouré au moins partiellement d'une autre cavité (232) qui, comme le volume de la chambre négative (207) du dispositif de cylindres (203), participe au volume (202a) de la chambre à air négative (202), et/ou le dispositif de cylindres (203) étant solidarisé de manière fixe au premier tube (261) et présentant des ouvertures de flux (233, 234) donnant dans la cavité supplémentaire (231) et dans l'autre cavité (232), et/ou ladite cavité supplémentaire (231) et ladite autre cavité (232) étant axialement adjacentes et séparées l'une de l'autre par un joint d'étanchéité (239).
